(19) Europäisches Patentamt / European Patent Office / Office européen des brevets

(11) **EP 4 593 503 A1**

(12) **EUROPEAN PATENT APPLICATION**
published in accordance with Art. 153(4) EPC

(43) Date of publication:
**30.07.2025 Bulletin 2025/31**

(21) Application number: **23884646.3**

(22) Date of filing: **24.10.2023**

(51) International Patent Classification (IPC):
**H04W 72/25** (2023.01)

(52) Cooperative Patent Classification (CPC):
**H04L 5/00; H04W 72/25**

(86) International application number:
**PCT/CN2023/126101**

(87) International publication number:
**WO 2024/093714 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.11.2022 CN 202211380075**

(71) Applicant: **CICT Connected and Intelligent Technologies Co., Ltd.**
**Chongqing 400041 (CN)**

(72) Inventors:
• **WANG, Yakun**
  **Chongqing 400000 (CN)**
• **ZHAO, Rui**
  **Chongqing 400000 (CN)**
• **WEN, Xiaoran**
  **Chongqing 400000 (CN)**
• **ZHENG, Shilei**
  **Chongqing 400000 (CN)**

(74) Representative: **HGF**
**HGF Limited**
**1 City Walk**
**Leeds LS11 9DX (GB)**

(54) **RESOURCE SELECTION METHOD AND APPARATUS FOR SIDELINK, AND USER EQUIPMENT**

(57) The present disclosure discloses a method and apparatus for selecting resource of a sidelink, and a user equipment, which relates to the technical field of communications. The method includes: determining an initial candidate resource set according to resource pool configuration information and/or a first parameter, wherein the resource pool configuration information includes configuration information of a sub-channel, and the sub-channel includes an interlaced resource block (IRB); performing resource exclusion in the initial candidate resource set, and determining a remaining candidate resource set meeting a requirement; and selecting, from the remaining candidate resource set, a transmission resource for physical sidelink control channel (PSCCH) and physical sidelink shared channel (PSSCH) transmission.

Fig. 2

```
┌────────────────────────────────────────────────────────┐
│ Determine an initial candidate resource set according  │      201
│ to resource pool configuration information and/or a    │
│ first parameter, wherein the resource pool             │
│ configuration information includes configuration       │
│ information of a sub-channel, and the sub-channel      │
│ includes interlaced resource blocks (IRBs)             │
└────────────────────────────────────────────────────────┘
                          │
                          ▼
┌────────────────────────────────────────────────────────┐
│ Performing resource exclusion in the initial candidate │      202
│ resource set, and determine a remaining candidate      │
│ resource set meeting a requirement                     │
└────────────────────────────────────────────────────────┘
                          │
                          ▼
┌────────────────────────────────────────────────────────┐
│ Select, from the remaining candidate resource set, a   │      203
│ transmission resource for physical sidelink control    │
│ channel (PSCCH) and physical sidelink shared channel   │
│ (PSSCH) transmission                                   │
└────────────────────────────────────────────────────────┘
```

EP 4 593 503 A1

## Description

**Cross-Reference** to Related Application

This application claims the priority of Chinese Patent Application No. 202211380075.8 filed in China on November 4, 2022, the entire content of which is hereby incorporated by reference.

Technical Field

The present disclosure relates to the technical field of communications, and in particular, to a method and apparatus for selecting resource of a sidelink, and a user equipment.

Background

A terminal device operating in an unlicensed spectrum needs to satisfy limitations of an occupied channel bandwidth (OCB) and a power spectral density (PSD). Therefore, a structure of an interlaced resource block (IRB) is introduced into a new radio operating on unlicensed spectrum (NR-U). In a mechanism operating in a sidelink on unlicensed spectrum (SL-U), a physical sidelink control channel (PSCCH) and a physical sidelink shared channel (PSSCH) also support the structure of the IRB. In addition, for PSSCH transmission, the concept of a sub-channel in R16/R17 is used. A sub-channel is a minimum granularity for the PSSCH transmission. A sub-channel is defined to be one or more IRBs, so the sub-channel is no longer consecutive physical resource blocks (PRBs) in a frequency domain. A resource allocation mechanism of R16/R17 is designed based on a sub-channel containing consecutive PRBs and is not applicable to a resource selection process in an SL-U IRB structure.

Summary

The present disclosure aims to provide a method and apparatus for selecting resource of a sidelink, and a user equipment, to solve the problem that a resource selection method in the related technology is not applicable to an SL-U IRB structure.

In a first aspect, to achieve the above objectives, the present disclosure provides a method for selecting resource of a sidelink, applied to a first user equipment, and including:

determining an initial candidate resource set according to resource pool configuration information and/or a first parameter, wherein the resource pool configuration information includes configuration information of a sub-channel, and the sub-channel includes interlaced resource blocks (IRBs);

performing resource exclusion on the initial candidate resource set, and determining a remaining candidate resource set meeting a requirement; and

selecting, from the remaining candidate resource set, a transmission resource for PSCCH and PSSCH transmission.

In a second aspect, to achieve the above objectives, the present disclosure provides an apparatus for selecting resource of a sidelink, applied to a first user equipment, and including:

a first determination component, configured to determine an initial candidate resource set according to resource pool configuration information and/or a first parameter, wherein the resource pool configuration information includes configuration information of a sub-channel, and the sub-channel includes interlaced resource blocks (IRBs);

a second determination component, configured to: perform resource exclusion on the initial candidate resource set, and determine a remaining candidate resource set meeting a requirement; and

a selection component, configured to select, from the remaining candidate resource set, a transmission resource for PSCCH and PSSCH transmission.

In a third aspect, to achieve the above objectives, the present disclosure provides a user equipment, including: a processor, a memory, and a program stored on the memory and runnable on the processor, wherein the program, when run by the processor, implements the steps of the method for selecting resource of the sidelink as described in the first aspect.
In a fourth aspect, to achieve the above objectives, the present disclosure provides a readable-storage medium, having a program stored thereon, wherein the program, when run by a processor, implements the steps of the method for selecting resource of the sidelink as described in the first aspect.

The above technical solutions of the present disclosure at least have the following beneficial effects:
In the method for selecting resource of the sidelink of the embodiments of the present disclosure, a first UE first determines an initial candidate resource set according to resource pool configuration information and a first parameter, and then performs resource exclusion on the initial candidate resource set, to exclude unavailable candidate resources and obtain a remaining candidate resource set meeting a requirement, so that the first UE selects a transmission resource for PSCCH and PSSCH transmission from the remaining candidate resource set meeting the requirement. In this way, a resource selection flow applicable to an SL-U IRB structure is designed, and resource selection solutions in the related technology are optimized.

**Brief Description of the Drawings**

Fig. 1 is a schematic diagram of a frequency domain resource configuration of a resource pool in the related technology;

Fig. 2 is a flowchart of a method for selecting resource of a sidelink according to some embodiments of the present disclosure;

Fig. 3 is a schematic diagram of sub-channels defined in some embodiments of the present disclosure;

Fig. 4 is a schematic diagram of definitions and indexes of sub-channels in some embodiments of the present disclosure;

Fig. 5 is a schematic diagram of candidate single-slot resource in some embodiments of the present disclosure;

Fig. 6 is a schematic diagram of definitions of candidate single-slot resource in some embodiments of the present disclosure;

Fig. 7 is a schematic diagram I of reported available resource sets in some embodiments of the present disclosure;

Fig. 8 is a schematic diagram II of reported available resource sets in some embodiments of the present disclosure;

Fig. 9 is a schematic structural diagram of an apparatus for selecting resource of a sidelink in some embodiments of the present disclosure; and

Fig. 10 is a schematic structural diagram of a user equipment in some embodiments of the present disclosure.

**Detailed Description of the Embodiments**

The technical solutions in the embodiments of present disclosure are clearly and completely described below with reference to the accompanying drawings in the embodiments of present disclosure. Apparently, the described embodiments are some rather than all the embodiments of present disclosure. All other embodiments obtained by a person of ordinary skill in the art based on the embodiments of the present disclosure without making creative efforts shall fall within the protection scope of the present disclosure.

The terms "first", "second", etc. in this specification and claims of the present disclosure are defined to distinguish similar objects, and do not have to be used to describe a specific order or sequence. It should be understood that such used data is interchangeable where appropriate, so that the embodiments of the present disclosure described here can be implemented in an order other than those illustrated or described here. In addition, "and/or" used in this specification and the claims represents at least one of the connected objects. Symbol "/" usually represents an "or" relationship between front and back associated objects.

Before the embodiments of the present disclosure are explained, relevant technical points will be explained first:

I. R16 physical layer structure and physical layer process

Parameters related to a frequency domain resource configuration of a resource pool are shown in Table 1 below:

Table 1

| Name of parameter | Function |
|---|---|
| sl-SubchannelSize-r16 | Minimum granularity of a frequency domain in a resource awareness process, which can be understood as a size of a sub-channel or a quantity of PRBs included in a sub-channel and may be {10, 12, 15, 20, 25, 50, 75, 100} |
| sl-StartRB-Subchannel-r16 | Index of a starting PRB of a sub-channel with the smallest index in a resource pool |
| sl-NumSubchannel-r16 | It indicates a quantity of sub-channels in a resource pool, only supporting consecutive PRBs |
| sl-RB-Number-r16 | It indicates a total quantity of PRBs in a resource pool and that a Remaining RB cannot be used. The Remaining RB is a remaining PRB in the resource pool except sub-channels. |

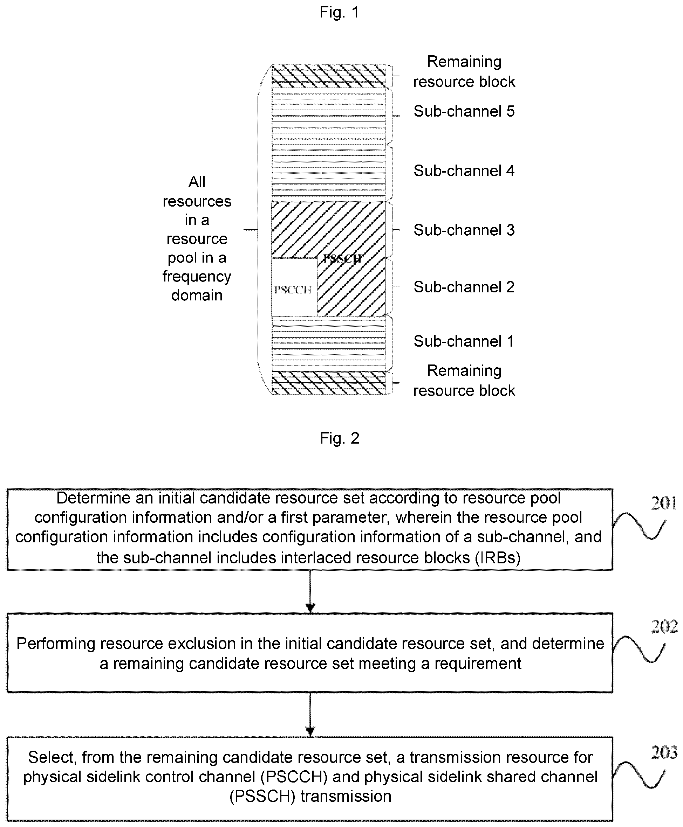

As shown in Fig. 1, a resource pool of R16 NR-V2X only supports consecutive PRBs in a frequency domain. If a quantity of PRBs allocated to the resource pool is not an integer multiple of a size of a sub-channel, to reduce excessive modifications to formed conclusions, it is decided not to use extra PRBs (such as Remaining RBs shown in Fig. 1).

II. IRB

In an NR-U system, considering requirements of laws and regulations, the design of an IRB is introduced, which means that two consecutive available resource blocks are separated by M resource blocks. For an IRB index m, it includes PRBs {m, m+M, m+2M, m+3M,...}, where m∈{0,1,...,M-1}, meaning that one IRB includes a plurality of PRBs, and a spacing of the PRBs is M. In the NR-U system, an IRB structure is respectively defined for two subcarrier spacings: 15 kHz and 30 kHz, as shown in the following table:

Table 2

| μ | Subcarrier spacing | Value of M |
|---|---|---|
| 0 | 15 kHz | 10 |
| 1 | 30 kHz | 5 |

The following will make a detailed description of a method and apparatus for selecting resource of a sidelink, and a user equipment in some embodiments of the present disclosure through specific embodiments and application scenarios thereof.

Fig. 2 shows a flowchart of a method for selecting resource of a sidelink according to some embodiments of the present disclosure. The method is applied to a first user equipment (UE). The method includes:

Step 201: An initial candidate resource set is determined according to resource pool configuration information and/or a first parameter, wherein the resource pool configuration information includes configuration information of a sub-channel, and the sub-channel includes interlaced resource blocks (IRBs).

In this step, the first parameter may be issued by a higher layer, or may be determined based on a pre-configured method, or may be determined based on specific information, such as a channel busy ratio (CBR), a channel occupancy ratio (CR), a channel access process (also referred to as listen before talk (LBT)) result, and a quantity of **RB** sets in a resource pool. In some embodiments of the present disclosure, for example, a physical layer of the first UE may determine an initial candidate resource set according to the obtained resource pool configuration information and the first parameter issued by the higher layer. The first parameter is related to the PSCCH and the PSSCH transmission.

Step 202: Resource exclusion is performed on the initial candidate resource set, to determine a remaining candidate resource set meeting a requirement. This step is specifically executed by the physical layer of the first UE. The remaining candidate resource set may also be referred to as an available resource set.

Step 203: A transmission resource for PSCCH and PSSCH transmission is selected from the remaining candidate resource set. This step is specifically executed by the higher layer of the first UE. The remaining candidate resource set may be a remaining candidate resource set reported by the physical layer to the higher layer.

In the method for selecting resource of the sidelink of some embodiments of the present disclosure, the physical layer of the first UE first determines the initial candidate resource set according to the obtained resource pool configuration information and the received first parameter, and then performs the resource exclusion on the initial candidate resource set, to exclude unavailable candidate resources and obtain the remaining candidate resource set meeting the requirement, so that the higher layer of the first UE selects the transmission resource for PSCCH and PSSCH transmission from the remaining candidate resource set meeting the requirement. In this way, a resource selection flow applicable to an SL-U IRB structure is designed, and resource selection solutions in the related technology are optimized.

In some embodiments of the present disclosure, the configuration information of the sub-channel includes: mapping relationship between a sub-channel and IRB, and/or, sub-channel indexes.

In some embodiments of the present disclosure, setting at least one of the mapping relationship between sub-channel and IRB, and the sub-channel indexes in the sub-channel configuration information can enable determination of candidate single-slot resource in the initial candidate resource set based on the information to meet a requirement of the first parameter carried by a higher-layer signaling, so that the entire resource selection process is applicable to the SL-U IRB structure.

In some embodiments of the present disclosure, the mapping relationship between sub-channel and IRB includes at least one of the following:

one sub-channel corresponds to N IRBs in the same resource block set (RB set); and

one sub-channel corresponds to N IRBs in the same resource pool,

wherein N is a configured or pre-configured positive integer.

It should be noted here that first, the RB set may be a listen before talk (LBT) sub-band, or a basic frequency domain granularity of LBT, which is 20 MHz, or a configuration in a channel other than a guard band. Second, N may be only 1, or different N values may be configured for different subcarrier spacings. Third, the N IRBs may be N consecutive IRBs. Being consecutive here may mean IRBs with consecutive indexes, or consecutive IRBs in the frequency domain. IRB indexes corresponding to the consecutive IRB in the frequency domain may not be consecutive. For example, IRB#5 and IRB#1 are one sub-channel.

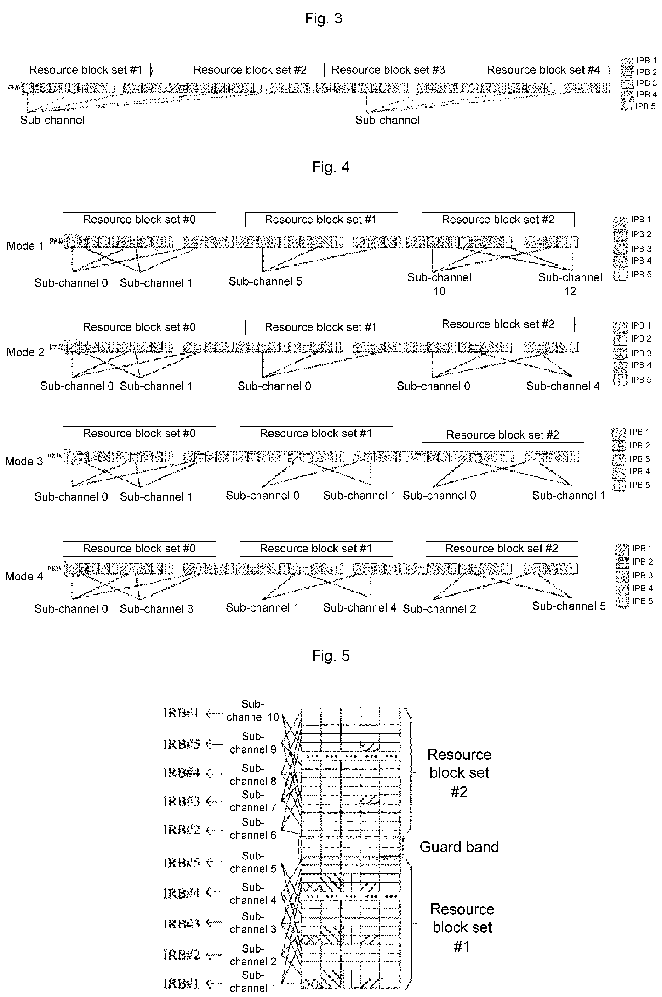

In addition, the mapping relationship between sub-channel and IRB may further be: One sub-channel corresponds to N consecutive IRBs in M consecutive RB sets, where M is a positive integer configured or pre-configured by the higher layer. Specifically, M may be equal to 1 (in this case, the mapping relationship between sub-channel and IRB is the same as the foregoing sub-channel corresponds to N consecutive IRBs in the same RB set), or M is a total quantity of RB sets in a resource pool. As an example, as shown in Fig. 3, the resource pool includes a total of four RB sets and five IRBs. One sub-channel corresponds to one IRB in two consecutive RB sets. For example, a portion of IRB#1 in RB set#1 and RB set#2 is one sub-channel, and a portion of IRB#1 in RB set#3 and RB set#4 is another sub-channel.

It should be noted here that in some embodiments of the present disclosure, the mapping relationship between sub-channel and IRB may be configured based on a granularity of the resource pool. For example, one sub-channel in resource pool 1 corresponds to N consecutive IRBs in the same resource block set (RB set), and one sub-channel in resource pool 2 corresponds to N consecutive IRBs in the same resource pool. Values of N in the two cases may be the same or different.

In some embodiments of the present disclosure, the sub-channel indexes are defined according to any one of the following:

Definition I: In a case that a resource pool includes one RB set, a sub-channel index of a first sub-channel is related to a frequency domain index of a $1^{st}$ IRB in the first sub-channel and a quantity of IRBs in sub-channels; the frequency domain index is related to a sort order of a plurality of IRBs in the resource pool in a frequency domain, wherein the first sub-channel is any sub-channel in the resource pool.

According to this definition mode, a $1^{st}$ IRB and its subsequent N-1 consecutive IRBs in the resource pool are a $1^{st}$ sub-channel of the resource pool; N+1 IRBs and its subsequent N-1 consecutive IRBs in the resource pool are a $2^{nd}$ sub-channel; and so on. In this way, a total quantity of sub-channels in the resource pool is equal to a total quantity of IRBs in the resource pool /N. When this ratio is not an integer, a round-down operation is performed, wherein N is a quantity of IRBs corresponding to each sub-channel. According to this rule, it can be concluded that the sub-channel index of the first sub-channel is 1+(i-1)/N (the sub-channel index starts from 1), or the sub-channel index of the first sub-channel is (i-1)/N (the sub-channel index starts from 0), wherein i represents the frequency domain index of the $1^{st}$ IRB of the first sub-channel. For example, the IRB with the frequency domain index being 1 represents the lowest/smallest IRB in the resource pool in the frequency domain, and this IRB may not necessarily be an IRB with the smallest index.

Definition II: In a case that the resource pool includes a plurality of RB sets, a sub-channel index of a second sub-channel is defined according to the mapping relationship between sub-channel and IRB; and the second sub-channel is any sub-channel in the resource pool.

Namely, sub-channel indexing modes vary depending on different mapping relationship between sub-channel and IRB. The following will describe numbering modes respectively for different mapping relationship between sub-channel and IRB:

In some embodiments of the present disclosure, the sub-channel indexes of the sub-channels are defined according to the mapping relationship between sub-channel and IRB, which includes any one of the following:

(I) In a case that the mapping relationship between sub-channel and IRB indicates that one sub-channel corresponds to N consecutive IRBs in the same resource pool, the sub-channel index of the second sub-channel is related to a frequency domain index of a 1st IRB of the second sub-channel and the quantity of the IRBs included in the sub-channels.

According to this definition mode, a 1st IRB and its subsequent N-1 consecutive IRBs in the resource pool are a 1st sub-channel of the resource pool; an (N+1)th IRBs and its subsequent N-1 consecutive IRBs in the resource pool are a 2nd sub-channel; and so on. In this way, the total quantity of sub-channels in the resource pool is equal to the total quantity of IRBs in the resource pool/N. Similarly, when the ratio is not an integer, a down rounding operation is performed; among them, N is the quantity of the IRBs corresponding to each sub-channel. According to this rule, it can be concluded that the sub-channel index of the second sub-channel is 1+(i-1)/N (the sub-channel index starts from 1), or the sub-channel index of the second sub-channel is (i-1)/N (the sub-channel index starts from 0), wherein i represents the frequency domain index of the 1st IRB corresponding to the second sub-channel. The IRB with the frequency domain index being 1 represents the lowest/smallest IRB in the resource pool in the frequency domain, and this IRB may not necessarily be an IRB with the smallest index.

(II) In a case that the mapping relationship between sub-channel and IRB indicates that one sub-channel corresponds to N consecutive IRBs in a same RB set, the sub-channel indexes are defined according to any rule of the following:

The sub-channels in different RB sets are numbered cumulatively in sequence. Namely: The sub-channels in each RB set are numbered in sequence according to a numbering order of the RB sets. The sub-channel index of a 1st sub-channel in an ith RB set is after the sub-channel index of a last sub-channel in the i-1th RB set, and the two sub-channel indexes are adjacent;

sub-channels in different RB sets are numbered independently in sequence; and

the sub-channels are numbered cumulatively in sequence based on the IRBs.

In some embodiments of the present disclosure, the sub-channel index of the second sub-channel is defined according to the rule that the sub-channels in different RB sets are numbered cumulatively in sequence, which includes: The sub-channel index of the second sub-channel is defined according to the frequency domain index of the 1st IRB of the second sub-channel, the quantity of the IRBs corresponding to each sub-channel, and a total quantity of sub-channels in previous (m-1) RB sets, wherein the second sub-channel is in an mth RB set, $1 \leq m \leq M$; M is a total quantity of RB sets in the resource pool; and frequency domain indexes of the IRBs in the RB sets are numbered independently.

For example, a 1st IRB (meaning a lowest/smallest IRB in a 1st RB set in the frequency domain) in a 1st RB set in the resource pool and its subsequent N-1 consecutive IRBs are a 1st sub-channel of the resource pool; an (N+1)th IRB and its subsequent N-1 consecutive IRBs in the 1st RB set in the resource pool are a 2nd sub-channel; and so on. A quantity of sub-channels in the 1st RB set is j. A 1st IRB and its subsequent N-1 consecutive IRBs in a 2nd RB set in the resource pool are a (j+1)th sub-channel of the resource pool; an (N+1)th IRB and its subsequent N-1 consecutive IRBs in the 2nd RB set in the resource pool are a (j+2)th sub-channel; and so on. Therefore, a total quantity of sub-channels in the resource pool is

$$\sum_{m=1}^{M} \left( N_{RBSet,m} / N \right)$$

, wherein M represents a total quantity of RB sets in the resource pool; $N_{RBSet,m}$ represents a quantity of IRBs in an mth RB set; and N represents a quantity of IRBs corresponding to a sub-channel.

Namely, when the sub-channel indexes are defined using this specific implementation, the sub-channel index of the sub-channel corresponding to IRBs from an ith IRB to an (i+N-1)th IRB in the mth RB set is a sum of a total quantity of sub-channels in previous m-1 RB sets and 1+(i-1)/N (the sub-channel index starts from 1), or, a sum of a total quantity of sub-channels in previous m-1 RB sets and (i-1)/N (the sub-channel index starts from 0), wherein i represents a frequency domain index of a 1st IRB in its RB set in the sub-channel corresponding to the IRBs from the ith IRB to the (i+N-1)th IRB; N is the quantity of the IRBs included in each sub-channel; and M is the quantity of the RB sets, $1 \leq m \leq M$. The frequency domain index is related to a frequency domain position of the IRB in its RB set.

In some embodiments of the present disclosure, as shown in Fig. 4, the resource pool has a total of five IRBs and three RB sets. One sub-channel corresponds to one IRB in one RB set. An example of this definition mode is shown in Mode 1 of Fig. 4. Sub-channels in all RB sets are numbered in sequence.

In some embodiments of the present disclosure, the sub-channel index of the second sub-channel is defined according to the rule that the sub-channels in different RB sets are numbered independently in sequence, which includes:

(1) When the second sub-channel corresponds to IRBs in a first RB set, the sub-channel index of the second sub-channel is determined according to a frequency domain index of a $1^{st}$ IRB of the second sub-channel and the quantity of the IRBs included in the sub-channels. The frequency domain indexes of the IRBs in the RB sets are numbered independently. The first RB set is any RB set in the resource pool. In another RB set except the first RB set, the sub-channel index of a sub-channel corresponding to the IRBs that are the same as the IRBs corresponding to the second sub-channel is the same as the sub-channel index of the second sub-channel. That is, the sub-channel indexes of the sub-channels corresponding to the same IRBs are the same. "Being the same" here means the IRBs have the same indexes.

For example, a $1^{st}$ IRB and its subsequent N-1 consecutive IRBs in a $1^{st}$ RB set in the resource pool are a $1^{st}$ sub-channel; an $(N+1)^{th}$ IRB and its subsequent N-1 consecutive IRBs in the $1^{st}$ RB set in the resource pool are a $2^{nd}$ sub-channel; and the numbering rule for the sub-channels in the $1^{st}$ RB set can be in the same manner.

In a $2^{nd}$ RB set in the resource pool, a sub-channel corresponding to IRBs that are the same as IRBs corresponding to the $1^{st}$ sub-channel in the $1^{st}$ RB set is a $1^{st}$ sub-channel (i.e., in different RB sets, the sub-channel indexes of the sub-channels corresponding to the IRBs having the same indexes are the same). A sub-channel, corresponding to IRBs that are the same as the IRBs corresponding to the $2^{nd}$ sub-channel of the $1^{st}$ RB set, in the $2^{nd}$ RB set in the resource pool is a $2^{nd}$ sub-channel. The numbering rule for the sub-channels in the $2^{nd}$ RB set can be in the same manner.

In a $3^{rd}$ RB set in the resource pool, a sub-channel corresponding to IRBs that are the same as the IRBs corresponding to the $1^{st}$ sub-channel of the $1^{st}$ RB set is a $1^{st}$ sub-channel. A sub-channel, corresponding to IRBs that are the same as IRBs corresponding to a $3^{rd}$ sub-channel of the $1^{st}$ RB set, in the $3^{rd}$ RB set in the resource pool is a $3^{rd}$ sub-channel. The numbering rule for the sub-channels in the $3^{rd}$ RB set can be in the same manner.

The numbering rules for sub-channels in subsequent RB sets are also in the same manner.

Therefore, when the sub-channels are numbered using the numbering rule of this specific implementation, the sub-channel index of the second sub-channel corresponding to the $i^{th}$ IRB to the $(i+N-1)^{th}$ IRB in the first RB set is 1+(i-1)/N (the sub-channel index starts from 1) or (i-1)/N (the sub-channel index starts from 0). In other RB sets, the sub-channel index of the sub-channel corresponding to the IRBs that are the same (having the same indexes) as the $i^{th}$ IRB to the $(i+N-1)^{th}$ IRB in the first RB set is 1+(i-1)/N (the sub-channel index starts from 1) or (i-1)/N (the sub-channel index starts from 0), wherein i represents the frequency domain index of the $1^{st}$ IRB in the first RB set of the second sub-channel, and N is the quantity of the IRBs corresponding to each sub-channel.

In some embodiments of the present disclosure, as shown in Fig. 4, the resource pool has a total of five IRBs and three RB sets. One sub-channel corresponds to one IRB in one RB set. An example of this definition mode is shown in Mode 3 of Fig. 4. The sub-channels in the RB sets are numbered independently, and the IRBs corresponding to the sub-channels with the same sub-channel indexes in different RB sets are the same.

In addition, in some embodiments of the present disclosure, the sub-channel index of the second sub-channel is defined according to the rule that the sub-channels in different RB sets are numbered independently in sequence, which includes:

The sub-channel index of the second sub-channel in each RB set is related to a frequency domain index of a $1^{st}$ IRB corresponding to the second sub-channel and a quantity of IRBs corresponding to each sub-channel. The frequency domain indexes of the IRBs in each RB set are numbered independently.

For example: in each RB set, the sub-channel index of a sub-channel composed of an $i^{th}$ IRB to an (i+N-1) IRB is 1+(i-1)/N (the sub-channel index starts from 1), or, the sub-channel index of the second sub-channel is (i-1)/N (the sub-channel index starts from 0), wherein i represents the frequency domain index of the $1^{st}$ IRB in the sub-channel composed of the $i^{th}$ IRB to the $(i+N-1)^{th}$ IRB.

For example, a $1^{st}$ IRB and its subsequent N-1 consecutive IRBs in a $1^{st}$ RB set in the resource pool are a $1^{st}$ sub-channel; an $(N+1)^{th}$ IRB and its subsequent N-1 consecutive IRBs in the $1^{st}$ RB set in the resource pool are a $2^{nd}$ sub-channel. The sub-channels in the $1^{st}$ RB set are numbered in the same manner.

A $1^{st}$ IRB and its subsequent N-1 consecutive IRBs in a $2^{nd}$ RB set in the resource pool are a $1^{st}$ sub-channel; an $(N+1)^{th}$ IRB and its subsequent N-1 consecutive IRBs in the $2^{nd}$ RB set in the resource pool are a $2^{nd}$ sub-channel; and the numbering rule for the sub-channels in the $2^{nd}$ RB set can be in the same manner.

The numbering rules for sub-channels in subsequent RB sets are also in the same manner.

In some embodiments of the present disclosure, as shown in Fig. 4, the resource pool has a total of five IRBs and three RB sets. One sub-channel corresponds to one IRB in one RB set. An example of this definition mode is shown in Mode 2 of Fig. 4. The sub-channels in the RB sets are numbered independently, and the IRBs corresponding to the sub-channels in different RB sets are independent of each other.

In some embodiments of the present disclosure, the sub-channel index of the second sub-channel is defined according to the rule that the sub-channels are numbered cumulatively in sequence based in the IRBs, which includes:

When the second sub-channel corresponds to IRBs of a 1st RB set, the sub-channel index of the second sub-channel is determined according to the frequency domain index of the 1st IRB corresponding to the second sub-channel, a quantity of the IRBs included in each sub-channel, and a total quantity M of RB sets in the resource pool,

wherein in an mth RB set, the sub-channel index of the sub-channel corresponding to the IRBs that are the same as the IRBs corresponding to the second sub-channel is related to the sub-channel index of the second sub-channel and m, wherein $2 \leq m \leq M$. Specifically, for example, the sub-channel index of the sub-channel corresponding to the IRBs that are the same as the IRBs corresponding to the second sub-channel is a sum of the sub-channel index of the second sub-channel and m-1, wherein the same IRBs are IRBs having the same indexes.

It should be noted that the mth RB set does not mean an index of an RB set, such as RB set#0 RB set#1. A 1st RB set is RB set#0, and a 2nd RB set is RB set#1.

For example, a 1st IRB in a 1st RB set in the resource pool and its subsequent N-1 consecutive IRBs are a 1st sub-channel of the resource pool; a sub-channel, corresponding to IRBs that are the same as the IRBs corresponding to the 1rst sub-channel, in a 2nd RB set in the resource pool is a 2nd sub-channel. A sub-channel, corresponding to IRBs that are the same as IRBs corresponding to the 1st sub-channel, in a 3rd RB set in the resource pool is a 3rd sub-channel; and so on. A total quantity of sub-channels corresponding to the 1st IRB and its subsequent N-1 consecutive IRBs in the resource pool is j.

An (N+1)th IRB and its subsequent N-1 consecutive IRBs in the 1st RB set in the resource pool are a (j+1)th sub-channel; a sub-channel, corresponding to IRBs that are the same as the IRBs corresponding to the (j+1)th sub-channel, in the 2nd RB set in the resource pool is a (j+2)th sub-channel; a sub-channel, corresponding to IRBs that are the same as the IRBs corresponding to the (j+1)th sub-channel, in the 3rd RB set in the resource pool is a (j+3)th sub-channel; and so on.

The numbering rules for sub-channels corresponding to subsequent IRBs are in the same manner.

Therefore, when sub-channels are numbered using the numbering rule in this specific implementation, the sub-channel index of the second sub-channel corresponding to IRBs from an ith IRB to an (i+N-1)th IRB in the 1st RB set is: 1+M*(i-1)/N (the sub-channel index starts from 1). Furthermore, the sub-channel index of the sub-channel corresponding to IRBs from an ith IRB to an (i+N-1)th IRB in an mth RB set is m+M*(i-1)/N. Or, the sub-channel index of the second sub-channel corresponding to IRBs from an ith IRB to an (i+N-1)th IRB in the 1st RB set is M*(i-1)/N (the sub-channel index starts from 0), and the sub-channel index of the sub-channel corresponding to the IRBs from an ith IRB to an (i+N-1)th IRB in an mth RB set is m-1+M*(i-1)/N. The ith IRB is a 1st IRB corresponding to the second sub-channel; N is a quantity of IRBs included in each sub-channel; M is a quantity of RB sets, $2 \leq m \leq M$; and the second sub-channel is any sub-channel in the 1st RB set.

In some embodiments of the present disclosure, as shown in Fig. 4, the resource pool has a total of five IRBs and three RB sets. One sub-channel corresponds to one IRB in one RB set. An example of this definition mode is shown in Mode 4 of Fig. 4.

In some embodiments of the present disclosure, the first parameter includes at least one of the following:

RB set indication information, including indication information of an RB set in which the initial candidate resource set is, and/or, a number of used RB sets for determining the initial candidate resource set, wherein there are several explanations below for the RB set indication information: Firstly, the RB set indication information can be further understood as indication information for determining the transmission resource and/or an RB set in which the remaining candidate resource set is, namely: the transmission resource is determined from the **RB** set indicated by the **RB** set indication information, or the **RB** set indication information can be further understood as frequency domain indication information for a resource selection window; secondly, the **RB** set indicated by the **RB** set indication information may be an **RB** set with a consecutive frequency domain, or, an **RB** set with a nonconsecutive frequency domain; thirdly, the **RB** set indication information may indicate the **RB** set using an index, a bitmap, a resource indicator value (RIV), or the like;

a type of a candidate single-slot resource, wherein the type of the candidate single-slot resource may be: a type of transmission resource, a type of candidate resource in the initial candidate resource set, a type of available transmission resource, a type of candidate resource in the remaining candidate resource set, and the like; the type of the candidate single-slot resource is indicated through an higher-layer signaling; for example, the type of candidate resource expected to be reported by the physical layer is a candidate single-slot resource in the same RB set, or a candidate single-slot resource in different RB sets corresponding to the same IRBs;

a quantity of the initial candidate resource set; and

a quantity of the remaining candidate resource set.

In some embodiments of the present disclosure, the first parameter includes at least one of the following:

RB set indication information, including indication information of an RB set in which the initial candidate resource set is, and/or, a number of used RB sets for determining the initial candidate resource set;

a type of a candidate single-slot resource;

a quantity of the initial candidate resource set;

a quantity of the remaining candidate resource set;

a quantity $L_{subCH}$ of sub-channels occupied by the PSCCH/PSSCH transmission, wherein $L_{subCH}$ may be determined based on at least one of a quantity of RB sets in the resource pool, a modulation and coding scheme (MCS), a transport block size (TBS), and a quantity of sub-channels in each RB set; for example, the quantity of the sub-channels needs to be an integral multiple of the quantity of the RB sets, e.g. the quantity of the sub-channels needs to be equal to 1 or an even number;

resource pool information;

L1 priority;

remaining service packet transmission delay;

resource reservation interval;

a resource that may be subjected to re-selection and/or pre-emption;

a resource selection mechanism indication, including full sensing, partial sensing, random resource selection, any composition, and the like;

resource selection window information: used for determining T2min which is used for determining a rear edge of a resource selection window;

RSRP threshold information;

RSRP information: determining whether reference signal received power (RSRP) measurement of UE is PSSCH-RSRP or PSCCH-RSRP;

resource reservation cycle list;

sensing window information: determining a front edge of a resource sensing window;

available resource ratio information: used for indicating a ratio that needs to be satisfied by the remaining candidate resource set; and

pre-emption information: used for indicating whether to support a pre-emption mechanism.

In some embodiments of the present disclosure, an example for this optional implementation is as follows:
A UE triggers resource selection at time n, and a signaling provided by a higher layer includes at least one of the following:
RB set(s) indication information: The resource pool includes a total of three RB sets, and this signaling indicates determining an available resource set from RB set#0 and RB set#1. A specific way for indication may be index {0,1} of an RB set, or may use a bitmap {110}.
The type of candidate single-slot resource is consecutive sub-channel.
The quantity $L_{subCH}$ of the sub-channels occupied by the PSCCH/PSSCH transmission is equal to 2;

resource pool information: indicating resource pool information, namely, resource selection is performed in the resource pool;

L1 priority;

remaining service packet transmission delay;

resource reservation interval; and

resource selection mechanism indication. Indication needs to use full sensing.

A UE determines all candidate single-slot resources in **RB** set#0 and **RB** set#1 as the initial candidate resource set, and the candidate single-slot resources only include candidate resources of two consecutive sub-channel types. As shown in Fig. 5, two consecutive sub-channels identified by "\" in a 2nd slot and two sub-channels identified by "|" in a 3rd slot are both candidate single-slot resources. Because only one sub-channel is identified by "×" in a 1st slot, this sub-channel is not a candidate single-slot resource. Although two sub-channels are identified by "/" in a 4th slot, the two sub-channels are not consistent with the indicated candidate resource type, so that they are not candidate single-slot resources. Furthermore, resource exclusion is further performed in RB set#0 and RB set#1. Then, a remaining candidate resource set (an available resource set/remaining candidate single-slot resource set) that meets a requirement in RB set#0 and RB set#1 are reported to the higher layer, and the higher layer performs resource selection in this set.

In some embodiments of the present disclosure, the first parameter may be determined according to a request of the higher layer, or determined by a pre-configured method, or determined based on specific information such as CBR, CR, a channel access process result, RB set information in the resource pool, and a channel access result.

In some embodiments of the present disclosure, the RB set indication information in the first parameter is determined according to at least one of the following: the quantity of the sub-channels occupied by the PSCCH and PSSCH transmission, a CBR, a CR, a channel access process result, and all pieces of RB set information in the resource pool.

For example, a UE performs LBT first, and then determines that RB set#1 in the resource pool (including RB set#1 and RB set#2) is idle. In this case, determination of the initialization candidate resource set, resource selection, and the like can be performed in RB set#1 only.

For another example, the UE can use an RB set with a less CBR as a target resource selection window, namely, to perform determination of the initial candidate resource set, resource selection, and the like in the RB set with the less CBR.

In some embodiments of the present disclosure, in step 201, an initial candidate resource set is determined according to resource pool configuration information and/or a first parameter, which includes:

(1) A candidate single-slot resource in a resource selection window is determined according to the resource pool configuration information and/or the first parameter. This step can specifically determine all types of candidate single-slot resources or determine a specific type of candidate single-slot resource, wherein the specific type may be determined based on the type of the candidate single-slot resource in the first parameter.

In this step, the basic principle of determining the candidate single-slot resource includes at least one of the following:

In terms of quantity, the candidate single-slot resource includes one sub-channel, and/or, the quantity of sub-channels included is equal to the quantity of the sub-channels occupied by the PSCCH/PSSCH transmission.

In terms of frequency domain, the candidate single-slot resource is consecutive sub-channels in one RB set. Being consecutive means that the IRBs corresponding to the sub-channels are consecutive, and/or, the sub-channels are consecutive in the frequency domain; and/or, the candidate single-slot resource includes a plurality of sub-channels located in more than one RB set, and the IRBs corresponding to the sub-channels in different RB sets may be the same, or the IRBs corresponding to the sub-channels in different RB sets may be the same or different.

(2) The initial candidate resource set is determined according to the candidate single-slot resource.

In some embodiments of the present disclosure, the type of the candidate single-slot resource is determined according to at least one of the following: the first parameter, a quantity of sub-channels occupied by the PSCCH and PSSCH transmission, a type of any supported candidate single-slot resource, and a type of any one supported candidate single-slot resource. Namely, the physical layer can determine the type of the candidate single-slot resource in the initial candidate resource set based on the first parameter, the quantity of the sub-channels occupied by the PSCCH and PSSCH transmission, the type of any supported candidate single-slot resource (all types of candidate single-slot resource), and the type of any one supported candidate single-slot resource which are carried in the higher-layer signaling issued by the higher layer. One resource pool only supports one type of candidate single-slot resource.

For example, the resource pool includes three RB sets, and a sub-channel is defined to be one IRB in one RB set. The UE needs to occupy four sub-channels for transmission. In this case, the transmission of the UE needs to be in one RB set, occupying four consecutive sub-channels in one RB set. Or, the transmission needs to be performed in two consecutive RB sets, and each RB set occupies two sub-channels which are consecutive in the frequency domain.

In some embodiments of the present disclosure, the definition of the candidate single-slot resource or the definition of the type of candidate single-slot resource is as follows: The candidate single-slot resource is in one slot in the time domain and is any one of the following in the frequency domain:

a sub-channel;

$L_{subCH}$ contiguous sub-channels, wherein the term "contiguous" here can mean being consecutive in the frequency domain and/or that indexes of the IRBs corresponding to the sub-channels are consecutive; the indexes are consecutive, which means that the indexes of the IRBs are adjacent, but is not limited to an ascending order of the indexes of the IRBs. Specifically, as shown in Fig. 4, in Mode 4, sub-channel 0 (Sub-channel #0)+Sub-channel#3 (the sub-channel indexes are not consecutive, but the indexes of the IRB are consecutive); and/or, the term "consecutive" here may further mean that the sub-channel indexes are consecutive. Specifically, as shown in Mode 4 in Fig. 4, Sub-channel #0+Sub-channel#1 (the sub-channels are not consecutive in the frequency domain, wherein the sub-channels are not consecutive in the frequency domain, which includes sub-channels being in the same RB set, but their corresponding IRBs are not consecutive; or, the sub-channels being in different RB sets); furthermore, in this way, the $L_{subCH}$ contiguous sub-channels can be in different RB sets, wherein the IRBs corresponding to the $L_{subCH}$ contiguous sub-channels in different RB sets should be the same, or the IRBs corresponding to the $L_{subCH}$ contiguous sub-channels in different RB sets should be the same or different;

$L_{subCH}$ contiguous sub-channels in the same RB set, wherein the term "contiguous" here means that the frequency domain is consecutive or the indexes of the IRBs are consecutive; as mentioned earlier, the indexes being consecutive is not limited to a case that the indexes are consecutive in an ascending order;

$L_{subCH}$ sub-channels in a plurality of adjacent RB sets, wherein each sub-channel is in different RB sets and these RB sets are adjacent, wherein the sub-channels corresponding to different RB sets have the same IRBs; and

P contiguous RB sets, wherein each RB set includes Q contiguous sub-channels, wherein P and Q are positive integers, and a product of P and Q is $L_{subCH}$. It should be noted here that the term "contiguous" means that the corresponding IRBs in the frequency domain are consecutive, wherein the IRBs corresponding to the sub-channels in each RB set are the same or are the same and different.

In addition, the candidate single-slot resource may be further any one of the following in the frequency domain:

$L_{subCH}$ sub-channels in different RB sets, wherein the IRBs corresponding to the sub-channels in different RB sets are the same; namely, each sub-channel is in different RB sets, and these RB sets can be adjacent or not adjacent; and

$L_{subCH}$ sub-channels in different and adjacent RB sets, wherein in this way, each sub-channel is in different RB sets, and the IRBs corresponding to the sub-channels in different RB sets are the same or are the same and different; and

$L_{subCH}$ sub-channels in different RB sets. In this way, the IRBs corresponding to the sub-channels in different RB sets can be the same or different. Furthermore, these RB sets may be adjacent or not adjacent. For example, if $L_{subCH}$ is 2 here, the candidate single-slot resource may be a last sub-channel in a 1st RB set and a 1st sub-channel in a 2nd RB set.

In some embodiments of the present disclosure, a specific example for this specific implementation is as follows: For a resource pool, a frequency domain configuration is shown in Fig. 4, and a time domain configuration only includes one slot. One sub-channel corresponds to one IRB in one RB set, and there are a total of 15 sub-channels in the frequency domain (different sub-channels may have the same indexes).

For the definition and numbering of the sub-channels in Mode 1 in Fig. 4, the candidate single-slot resource is as follows:

When a candidate single-slot resource is a sub-channel in the frequency domain, the candidate single-slot resource may be any sub-channel.

When the candidate single-slot resource is two consecutive sub-channels in the frequency domain, the candidate single-slot resource is, for example, Sub-channel#0+Sub-channel#1 (with consecutive IRB indexes and consecutive sub-channel indexes), Sub-channel#4+Sub-channel#5 (with consecutive sub-channel indexes, but non-consecutive IRBs corresponding to the frequency domain).

When the candidate single-slot resource is two consecutive sub-channels in the same **RB** set in the frequency domain, the candidate single-slot resource is, for example, Sub-channel#0+Sub-channel#1 (with consecutive frequency domains and consecutive sub-channel indexes), and Sub-channel#4+Sub-channel#5 are no longer candidate single-slot resources.

When the candidate single-slot resource is located in two sub-channels in a plurality of adjacent **RB** sets in the frequency domain, the candidate single-slot resource is, for example: Sub-channel#0+Sub-channel#8.

When the candidate single-slot resource is $L_{subCH}$ sub-channels in different and adjacent **RB** sets in the frequency domain, the candidate single-slot resource is, for example, Sub-channel#0+Sub-channel#5 and/or Sub-channel#0+Sub-channel#8.

When the candidate single-slot resource is P contiguous **RB** sets in the frequency domain, and each **RB** set includes Q consecutive sub-channels, assuming that the UE requires four sub-channels, the candidate single-slot resource may be: Sub-channel#0+Sub-channel#1+Sub-channel#5+Sub-channel#6 and/or Sub-channel#0+Sub-channel#1+Sub-channel#8+Sub-channel#9.

For the definition and numbering of the sub-channels in Mode 3 in Fig. 4, the candidate single-slot resource is as follows:

When a candidate single-slot resource is a sub-channel in the frequency domain, the candidate single-slot resource may be any sub-channel.

When the candidate single-slot resource is two consecutive sub-channels in the frequency domain, the candidate single-slot resource is, for example, Sub-channel#0+Sub-channel#1 of RB set#0 and/or Sub-channel#4 of RB set#0+Sub-channel#0 of RB set#1.

When the candidate single-slot resource is two consecutive sub-channels in the same RB set in the frequency domain, the candidate single-slot resource is, for example, Sub-channel#0+Sub-channel#1 of RB set#0 and/or Sub-channel#0+Sub-channel#1 of RB set#1.

When the candidate single-slot resource is $L_{subCH}$ sub-channels in a plurality of adjacent RB sets in the frequency domain, the candidate single-slot resource is, for example, Sub-channel#0 of RB set#0 and Sub-channel#0 of RB set#1.

When the candidate single-slot resource is $L_{subCH}$ sub-channels in different and adjacent RB sets in the frequency domain, the candidate single-slot resource is, for example, Sub-channel#0 of RB set#0+Sub-channel#0 of RB set#1 and/or Sub-channel#0 of RB set#0+Sub-channel#1 of RB set#1.

When the candidate single-slot resource is P contiguous RB sets in the frequency domain, and each RB set includes Q consecutive sub-channels, assuming that the UE requires four sub-channels, the candidate single-slot resource may be: Sub-channel#0 of RB set#0+Sub-channel#1 of RB set#0+Sub-channel#0 of RB set#1+Sub-channel#1 of RB set#1, and/or, Sub-channel#0 of RB set#0+Sub-channel#1 of RB set#0+Sub-channel#3 of RB set#0+Sub-channel#4 of RB set#0.

For the definition and numbering of the sub-channels in Mode 4 in Fig. 4, the candidate single-slot resource is as follows:

When a candidate single-slot resource is a sub-channel in the frequency domain, the candidate single-slot resource may be any sub-channel.

When the candidate single-slot resource is two consecutive sub-channels in the frequency domain, the candidate single-slot resource is, for example, Sub-channel#0+Sub-channel#1 and/or Sub-channel#0+Sub-channel#3.

When the candidate single-slot resource is two consecutive sub-channels in the same RB set in the frequency domain, the candidate single-slot resource is, for example, Sub-channel#0+Sub-channel#3.

When the candidate single-slot resource is located in two sub-channels in a plurality of adjacent RB sets in the frequency domain, the candidate single-slot resource is, for example, Sub-channel#0+Sub-channel#1.

When the candidate single-slot resource is two sub-channels in different and adjacent RB sets in the frequency domain, the candidate single-slot resource is, for example, Sub-channel#0+Sub-channel#1 and/or Sub-channel#0+Sub-channel#4.

It should be emphasized that in this specific implementation, the limitation on the frequency domain of the candidate single-slot resource above may be applied to a case in which one sub-channel corresponds to N consecutive IRBs in the same RB set.

When the candidate single-slot resource is P contiguous RB sets in the frequency domain, and each RB set includes Q consecutive sub-channels, assuming that the UE requires four sub-channels, the candidate single-slot resource may be: Sub-channel#0+Sub-channel#3+Sub-channel#1+Sub-channel#4.

It should be noted here that when the mapping relationship between sub-channel and IRB indicates that one sub-channel corresponds to N consecutive IRBs in the same resource pool, the candidate single-slot resource in the frequency domain is any one of the following: one sub-channel; and $L_{subCH}$ consecutive sub-channels. In this case, a specific example is as follows:

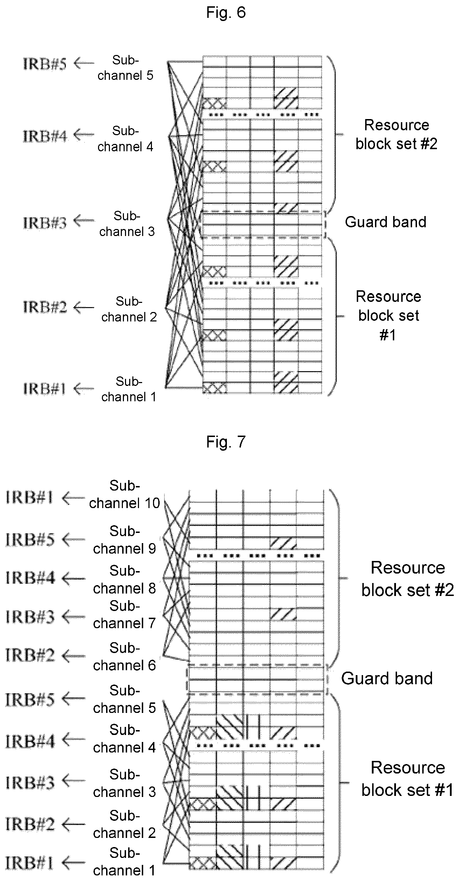

As shown in Fig. 6, one sub-channel corresponds to one IRB in the resource pool, including a total of five sub-channels in the frequency domain and five slots in the time domain. The higher-layer parameters (parameters carried in the higher-layer signaling, such as the first parameter) indicate that the PSCCH/PSSCH transmission occupies two sub-channels. The definition of the candidate single-slot resource and the total quantity of the candidate single-slot resource in the resource selection window are any one of the following:

Mode 1: The candidate single-slot resource is defined to be one sub-channel in the frequency domain. As shown in Fig. 6, the portion (sub-channel 1) labeled with "X" represents one candidate single-slot resource. Therefore, the total quantity of the candidate single-slot resources in the resource selection window is 5*5=25.

Mode 2: The candidate single-slot resource is defined to be two sub-channels in the frequency domain. As shown in Fig. 6, the portion (sub-channel 1+sub-channel 2) labeled with "/" represents one candidate single-slot resource. Therefore, the total quantity of the candidate single-slot resources in the resource selection window is 4*5=20.

It should be noted here that in some embodiments of the present disclosure, the consecutive frequency domain in the IRB structure may be consecutive IRB indexes, namely, a plurality of adjacent multiple IRBs.

In some embodiments of the present disclosure, the initial candidate resource set is determined according to the candidate single-slot resource, which includes any one of the following:

(1) When a quantity of the initial candidate resource set is equal to one, the initial candidate resource set includes at least one of the following in the resource selection window: all types of candidate single-slot resources, and all types of candidate single-slot resources in a target RB set. For example, if the resource pool only includes one type of candidate single-slot resource, the quantity of the initial candidate resource set is determined to be equal to one.

(2) When a quantity of the initial candidate resource set is greater than one, each initial candidate resource set includes at least one of the following: at least one type of candidate single-slot resource in the resource selection window, all types of candidate single-slot resources of a target RB set in the resource selection window or the resource pool, and all types of candidate single-slot resources in M **RB** sets in the resource selection window or the resource pool, wherein M is a configured or pre-configured positive integer. Specially, M may be 1 only. Specifically, on the one hand, the quantity of the initial candidate resource set may be related to the definition of the candidate single-slot resource. For example, when the type of the candidate single-slot resource includes $L_{subCH}$ consecutive sub-channels and/or $L_{subCH}$ sub-channels in a plurality of adjacent **RB** sets, and the IRBs corresponding to the sub-channels in different **RB** sets are the same, the quantity of the initial candidate resource sets may be two. One initial resource set includes candidate single-slot resources of the type of $L_{subCH}$ consecutive sub-channels, and the other initial resource set includes a candidate single-slot resource set of the type of $L_{subCH}$ sub-channel types in the plurality of adjacent **RB** sets. On the other hand, the target **RB** set can be either an **RB** set with a consecutive frequency domain or an RB set with a non-consecutive frequency domain.

In some embodiments of the present disclosure, the initial candidate resource set is determined according to the candidate single-slot resource, which further includes:
A quantity of the initial candidate resource set is determined according to at least one item in the first parameter, and/or, a quantity of a type of the determined candidate single-slot resource.

Namely, during the determination of the quantity of the initial candidate resource set, the quantity of the initial candidate resource set may be determined based on the higher-layer parameter configuration (first parameter), the pre-configuration, or the determined type of the candidate single-slot resource, wherein the higher-layer parameters may indicate that only one initial candidate resource set is included. For example, when only one type of candidate single-slot resource is included, the quantity of the initial candidate resource set is determined to be one. When more than one type of candidate single-slot resource is included, the quantity of the initial candidate resource set is further determined according to at least one item in the first parameter, and each initial candidate resource set may include one type of candidate single-slot resource or multiple types of candidate single-slot resources.

In some embodiments of the present disclosure, the target RB set is determined based on the first parameter; and the first parameter includes RB set indication information, and/or, a quantity of sub-channels occupied by the PSCCH and PSSCH transmission.

It should be noted here that in some embodiments of the present disclosure, the RB set indication information may be the same as the RB set indication information mentioned in the present disclosure, and will not be elaborated here.

In some embodiments of the present disclosure, the resource pool includes a total of three **RB** sets, and the sub-channel is defined to be one IRB in one RB set. The transmission of the UE needs to occupy two sub-channels, namely, the transmission of the UE is performed in at most two RB sets. In this case, the UE can randomly select two RB sets from the three RB sets, and the selected RB sets are RB set#1 and RB set#2 (target RE sets). Therefore, the UE takes all the candidate single-slot resources in RB set#1 and RB set#2 as the initial candidate resource set, and the finally determined available resource set is also in RB set#1 and/or RB set#2. Alternatively, the UE may use all the candidate single-slot resources in a specific RB set indicated by the RB set indication information (such as RB set#1 and/or RB set#3) as the initial candidate resource set, wherein the specific RB set is a target RB set.

In some embodiments of the present disclosure, the remaining candidate resource set meets at least one of the following requirements:

Requirement I: When there is one initial candidate resource set, a quantity of candidate single-slot resources in the remaining candidate resource set is greater than or equal to a product of a first ratio and a total quantity of candidate single-slot resources in the initial candidate resource set.

It should be noted here that the first ratio may be a value specified by a configuration, a pre-configuration, or an higher layer. When the type of candidate single-slot resource is one sub-channel or $L_{subCH}$ consecutive sub-channels in the same RB set, the first ratio may be a newly defined value, which is different from the definition in the related art, such as {30%, 50%, 70%}.

Requirement II: When there are a plurality of initial candidate resource sets, a quantity of candidate single-slot resources in each remaining candidate resource set is greater than or equal to a product of a second ratio and a total quantity of candidate single-slot resources in the initial candidate resource set corresponding to the remaining candidate resource set.

It should be noted here that the second ratio is a configured, pre-configured, or predefined value, which can be the same or different for different remaining candidate resource sets.

Requirement III: When there are a plurality of initial candidate resource sets, a quantity of candidate single-slot resources in at least one remaining candidate resource set is greater than or equal to a product of a third ratio and a total quantity of candidate single-slot resources in the initial candidate resource set corresponding to the at least one remaining candidate resource set.

Similarly, the third ratio is a configured, pre-configured, or predefined value, which can be the same or different for different remaining candidate resource sets.

Further, in some embodiments of the present disclosure, in step 202, after resource exclusion is performed on the initial candidate resource set, and a remaining candidate resource set meeting a requirement is determined, the method further includes any one of the following:

One remaining candidate resource set is reported. Specifically, when there is one remaining candidate resource set which includes all non-excluded candidate single-slot resources, the physical layer reports the remaining candidate resource set to the higher layer, or, when there is more than one (i.e. a plurality of) remaining candidate resource set, the physical layer reports one of the remaining candidate resource sets to the higher layer, wherein the physical layer can randomly select one remaining candidate resource set for reporting or report one remaining candidate resource set according to a pre-configured or defined rule (for example, a remaining candidate resource set including most candidate single-slot resources or a remaining candidate resource set that is determined first). Or, the physical layer reports all the remaining candidate resource sets to the higher layer.

A plurality of remaining candidate resource sets are reported, wherein each remaining candidate resource set includes one or more types of non-excluded candidate single-slot resources, or, each remaining candidate resource set includes non-excluded candidate single-slot resources in one or more RB sets.

It should be noted here that in some embodiments of the present disclosure, on the one hand, there is no necessary binding relationship between the quantity of the reported remaining candidate resource set and the quantity of the initial candidate resource set. Namely, the two quantities may have a one-to-one correspondence, or may have a one to many or many to one relationship. For example, when there is one initial candidate resource set, there may be still two or three finally reported remaining candidate resource sets. On the other hand, when reporting the remaining candidate resource set (meets the requirement), the physical layer can further report candidate resource sets that does not meet the requirement to the higher layer (the quantity of the candidate single-slot resources in the candidate resource sets after resource exclusion does not satisfy a product of a total quantity of resources in the initial candidate resource set and a pre-configured ratio).

In some embodiments of the present disclosure, as shown in Fig. 7, one sub-channel corresponds to one IRB in one RB set, and there are a total of 10 sub-channels in the frequency domain and five slots in the time domain. The higher-layer parameters (the first parameter) indicate that the PSCCH/PSSCH transmission occupies two sub-channels. If the UE determines that the remaining available resources determined after the resource exclusion are all labeled portions in Fig. 7, the remaining candidate resource set reported by the UE can use one of the following forms:

Only one resource set is included. This set includes all available resources {sub-channel 1+sub-channel 2 of a 2nd slot, sub-channel 1+sub-channel 2 of a 3rd slot, and sub-channel 1+sub-channel 7 of a 4th slot}.

Two resource sets are included. One resource set includes available resources in one RB set {sub-channel 1+sub-channel 2 of a 2nd slot, sub-channel 1+sub-channel 2 of a 3rd slot}, and the other resource set includes available resources in different RB sets {sub-channel 1+sub-channel 2 of the 3rd slot}.

Only one resource set is included, with a granularity of single sub-channel {sub-channel 1 of a 1st slot, sub-channel 1 of a 2nd slot, sub-channel 2 of the 2nd slot, sub-channel 1 of a 3rd slot, sub-channel 2 of the 3rd slot, sub-channel 1 of a 4th slot, and sub-channel 7 of the 4th slot}.

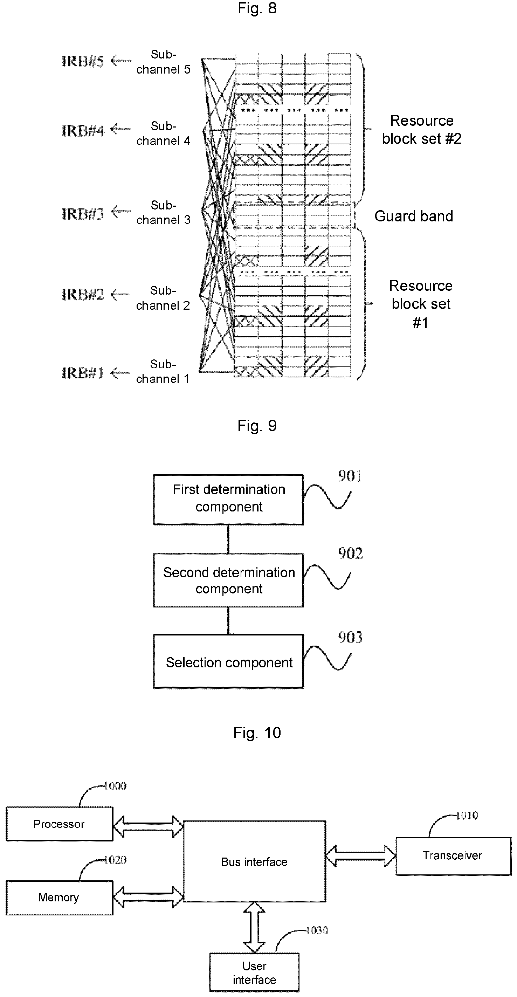

In some embodiments of the present disclosure, as shown in Fig. 8, one sub-channel corresponds to one IRB in the resource pool, including a total of five sub-channels in the frequency domain and five slots in the time domain. If the PSCCH/PSSCH transmission indicated by the higher-layer parameter occupies two sub-channels, the remaining candidate resource set reported by the UE may use one of the following forms:

Only one resource set is included. This set includes all available resources {sub-channel 1+sub-channel 2 of a 2nd slot (labeled by "\"), and sub-channel 1+sub-channel 2 of a 4th slot (labeled by "/")}.

Only one resource set with a granularity of single channel is included. This set includes all available resources {sub-channel 1 of a 1st slot (labeled by "X"), sub-channel 1 of a 2nd slot (a portion, labeled by "\", in sub-channel 1), sub-channel 2 of the 2nd slot (a portion, labeled with "\", in sub-channel 2), sub-channel 1 of a 4th slot (a portion, labeled by "/", in sub-channel 1), and sub-channel 2 of the 4th slot (a portion, labeled by "/", in sub-channel 2)}.

Further, in some embodiments of the present disclosure, the method further includes:

During the reporting one remaining candidate resource set, or during the reporting a plurality of remaining candidate resource sets, RB set indication information and/or type information is further reported, wherein the type information is used for indicating a type of the candidate single-slot resource in reported remaining candidate resource set or a type of remaining candidate resources in remaining candidate resource set.

Namely, indicating RB set indication information. The UE can select the transmission resource from a specific RB set according to specific information. Specific result information may be at least one of the following: a channel access result, a CBR, a CR, a quantity of RB sets, a quantity of sub-channels, and a quantity of sub-channels required for transmission.

The remaining candidate resource type information may enable the UE to select a specific type of transmission resource, such as, selecting resources in different RB sets but corresponding to the same IRBs, or selecting resources in the same RB set.

In some embodiments of the present disclosure, in step 203, a transmission resource for PSCCH and PSSCH transmission is selected from the remaining candidate resource set, which includes:

When only one remaining candidate resource set is included, any one of the following modes is used to select the transmission resource:

selecting the transmission resource randomly from the remaining candidate resource set;

preferentially selecting candidate single-slot resource in one RB set in the remaining candidate resource set as the transmission resource; further, if a candidate resource that satisfies a transmission condition cannot be selected from the candidate single-slot resource in one RB set, randomly selecting the transmission resource from the remaining candidate resource set; and

preferentially selecting candidate single-slot resource in different RB sets in the remaining candidate resource set as the transmission resource, wherein IRBs corresponding to sub-channels of the candidate single-slot resource in different RB sets are the same; further, if a transmission resource that satisfies a transmission condition cannot be selected from the candidate single-slot resource in different RB sets, randomly selecting the transmission resource from the remaining candidate resource set.

In some embodiments of the present disclosure, the remaining candidate resource set is the remaining candidate resource set reported by the physical layer to the higher layer.

Further, to improve the efficiency and accuracy of resource selection, in some embodiments of the present disclosure, during the selection of the transmission resource, a mode for selecting the transmission resource should be determined based on at least one of the following: a quantity of sub-channels occupied by the PSCCH and PSSCH transmission, a quantity of RB sets in the resource pool, and a quantity of sub-channels included in each RB set. For example, if there are two RB sets and three sub-channels, an available candidate resource in one RB set should be preferentially selected. Namely, it should be determined, based on the above at least one factor, whether to randomly select the transmission resource or to preferentially select the transmission resource from one RB set or to preferentially select the transmission resource from different RB sets. In this way, the efficiency for selecting a resource can be improved.

It should be noted here that the selection principle for the transmission resource may be based on the principle in this specific implementation. The transmission resource may be further selected based on a principle of preferentially selecting a discrete resource or based on the parity of the indexes of the RB sets.

In some embodiments of the present disclosure, when the transmission resource needs to occupy a plurality of sub-channels and the granularity of the remaining candidate resource set is single sub-channel, the selected transmission resource for single transmission is in the same RB set and the corresponding sub-channels are consecutive in the frequency domain, and/or the selected transmission resource for single transmission is in different RB sets and the IRBs corresponding to the sub-channels in different RB sets are the same.

In some embodiments of the present disclosure, by setting the transmission resource for a single transmission in the same RB set, the probability of a transmission failure due to a channel access failure can be reduced. By setting the transmission resource for a single transmission in different RB sets, with the same IRB indexes, the impact of peak to average power ratio (PAPR) can be reduced.

In some embodiments of the present disclosure, in step 203, a transmission resource for PSCCH and PSSCH transmission is selected from the remaining candidate resource set, which includes:
When a plurality of remaining candidate resource sets are included, any one of the following modes is used to select the transmission resource:

selecting the transmission resource from any one of the remaining candidate resource sets;

preferentially selecting the transmission resource from a first target remaining candidate resource set, wherein the first target remaining candidate resource set includes candidate single-slot resources in the same RB set, or the first target remaining candidate resource set includes candidate single-slot resources in different RB sets but corresponding to the same IRBs;

preferentially selecting the transmission resource from the remaining candidate resource sets in different RB sets; if the transmission resource cannot be selected, randomly selecting the transmission resource from any remaining candidate resource sets;

preferentially selecting the transmission resource from the remaining candidate resource sets in different RB sets; if the transmission resource cannot be selected, selecting the transmission resource from the remaining candidate resource sets in the same RB set; if the transmission resource still cannot be selected, selecting the transmission resource from any remaining candidate resource set.

Further, when the transmission resource cannot be selected from the first target remaining candidate resource set, any one of the following is performed:

selecting the transmission resource from any remaining candidate resource set; and

selecting the transmission resource from a second target remaining candidate resource set, and when the transmission resource is unable to be selected from the second target remaining candidate resource set, selecting the transmission resource from any remaining candidate resource set, wherein the second remaining candidate resource set includes candidate single-slot resources in different RB sets.

In some embodiments of the present disclosure, the method further includes:
Sidelink control information (SCI) is carried in a PSCCH, wherein the SCI at least includes a transmission resource indication field, and the transmission resource indication field includes at least one of the following:

sub-channel indication information, used for indicating sub-channel frequency domain information and/or a quantity of sub-channels, wherein specifically, the sub-channel indication information is any one of the following: a frequency resource indicator value (FRIV) ad a bitmap, wherein a quantity of FRIVs and a quantity of bits are related to a quantity of indication resources, a quantity of RB sets occupied by each transmission, sub-channel index, and a quantity of sub-channels in the RB sets occupied by each transmission;

resource type indication information, used for indicating the type of the transmission resource, including but not limited to: resources in one RB set (including resources that are in one RB set and are consecutive in the frequency domain, or resources that are in one RB set and are not consecutive in the frequency domain, or resources that are in one RB set and have consecutive or non-consecutive sub-channel indexes), resources in different RB sets (including resources in different RB sets, but different RB sets corresponding to the same IRBs, resources in different RB sets and different RB sets corresponding to different IRBs, and resources in different RB sets but having consecutive sub-channel indexes); and

RB set indication information, used for indicating an RB set in which the transmission resource is in, and/or, indicating a quantity of sub-channels corresponding to the RB set in which the transmission resource is.

In some embodiments of the present disclosure, when the sub-channel indication information is at least one FRIV, the sub-channel indication information is used for indicating at least one of the following:

frequency domain information of a transmission resource that is transmitted at most twice; and

frequency domain information of a transmission resource that is transmitted at most for three times.

That is, in some embodiments of the present disclosure, the frequency domain information of the transmission resource which is transmitted twice at most can be indicated by one FRIV or a plurality of FRIVs, or the frequency domain information of the transmission resource that is transmitted for at most three times can be indicated by one FRIV or a plurality of FRIVs.

In some embodiments of the present disclosure, when the sub-channel indication information indicates, through the at least one FRIV, the frequency domain information of the transmission resource that is transmitted twice at most, a quantity of the FRIV is determined according to at least one of the following: a quantity of occupied sub-channels, indexes of the sub-channels, a quantity of occupied RB sets, a quantity of RB sets in a resource pool, and a quantity of occupied sub-channels in each RB set.

In some embodiments of the present disclosure, considering the above factors, a current transmission and a subsequent transmission are indicated:

If Mode 1, 2, or 3 in Fig. 4 is used or sub-channel numbering, the transmission of the UE occupies two sub-channels in RB set#0: Sub-channel#0+Sub-channel#1. The indication information includes indicating RB set#0 (RIV mode) (Note: It is not required in Mode 1, but it is required in Mode 2 and Mode 3) and indicating Sub-channel#0+Sub-channel#1 (FRIV mode).

If Mode 1 in Fig. 4 is used for sub-channel numbering, the transmission of the UE occupies four sub-channels (Sub-channel#0+Sub-channel#1, Sub-channel#5+Sub-channel#6) in two RB sets (RB set#0, RB set#1). The indication information includes indicating RB set#0 and RB set#1 (RIV#1) (Note: This indication can be omitted), indicating Sub-channel#0+Sub-channel#1 (FRIV#1), and indicating Sub-channel#5+Sub-channel#6 (FRIV#2).

If Mode 2 and Mode 3 in Fig. 4 are used for sub-channel numbering, the transmission of the UE occupies four sub-channels in two RB sets (Sub-channel#0+Sub-channel#1 in RB set#0 and Sub-channel#0+Sub-channel#1 in RB set#1). The indication information includes indicating RB set#0 and RB set#1 (RIV#1), and indicating Sub-channel#0+Sub-channel#1 (FRIV#1).

If Mode 2 and Mode 3 in Fig. 4 is used for sub-channel numbering, the transmission of the UE occupies four sub-channels in two RB sets (Sub-channel#0+Sub-channel#1 in RB set#0 and Sub-channel#2+Sub-channel#3 in RB set#1). The indication information includes indicating RB set#0 and RB set#1 (RIV#1), indicating Sub-channel#0+Sub-channel#1 (FRIV#1) of RB set#0, and indicating Sub-channel#2+Sub-channel#3 (FRIV#2) of RB set#1.

If Mode 4 in Fig. 4 is used for sub-channel numbering, the transmission of the UE occupies two sub-channels (RB Sub-channel#0+Sub-channel#1) in RB set#0 and RB set#1. The indication information includes indicating RB set#0 and RB set#1 (RIV#1) (Note: This information can be omitted), and indicating Sub-channel#0+Sub-channel#1 (FRIV#1).

If Mode 4 in Fig. 4 is used for sub-channel numbering, the transmission of UE occupies two sub-channels (RB Sub-channel#0+Sub-channel#3) in RB set#0. The indication information includes indicating RB set#0 (FRIV#1) (Note: This information can be omitted), indicating Sub-channel#0 (FRIV#2), and indicating Sub-channel#1 (FRIV#3).

If Mode 4 in Fig. 4 is used for sub-channel numbering, the transmission of the UE occupies a total of four sub-channels in two RB sets (RB set#0 and RB set#1). For example, the four sub-channels occupied are as follows: RB Sub-channel#0+Sub-channel#1+Sub-channel#3+Sub-channel#4. The indication information includes indicating RB set#0 and RB set#1 (RIV#1) (Note: This indication can be omitted), indicating Sub-channel#0+Sub-channel#1 (FRIV#1), and indicating Sub-channel#3+Sub-channel#4 (FRIV#2).

Or, when the sub-channel indication information indicates, through the at least one FRIV, the frequency domain information of the transmission resource that is transmitted at most for three times, a quantity of the FRIV is determined according to at least one of the following: a quantity of the indicated transmission resources, a quantity of occupied sub-channels, indexes of the sub-channels, a quantity of occupied RB sets, a quantity of RB sets in a resource pool, and a quantity of occupied sub-channels in each RB set.

In some embodiments of the present disclosure, considering the above factors, two subsequent transmissions are indicated:

If Mode 1 in Fig. 4 is used for sub-channel numbering, the first transmission indicated occupies four sub-channels, such as, occupying the following four sub-channels: Sub-channel#0+Sub-channel#1 and Sub-channel#5+Sub-channel#6. The second transmission indicated occupies four sub-channels, such as, occupying Sub-channel#10+Sub-channel#11+Sub-channel#12+Sub-channel#13. Transmission resources of the two transmissions need to be indicated separately. The first transmission needs to use two FRIVs for indication, namely: indicating Sub-channel#0+Sub-channel#1 and Sub-channel#5+Sub-channel#6 respectively. The second transmission needs to use one FRIV to indicate the sub-channels for the second transmission: Sub-channel#10+Sub-channel#11+Sub-channel#12+Sub-chanel#13.

If Mode 1 in Fig. 4 is used for sub-channel numbering, the first transmission indicated occupies the following four sub-channels: Sub-channel#0+Sub-channel#1+Sub-channel#2+Sub-channel#3, and the second transmission indicated occupies four sub-channels. For example, the following four sub-channels can be occupied: Sub-channel#5+Sub-channel#6+Sub-channel#7+Sub-chanel#8. Therefore, only one FRIV is required to indicate the two transmissions.

If Mode 4 in Fig. 4 is used for sub-channel numbering, the first transmission indicated occupies three sub-channels. For example, the following three sub-channels can be occupied: Sub-channel#0+Sub-channel#1+Sub-channel#2. The second transmission indicated occupies three sub-channels. For example, the following three sub-channels are occupied: Sub-channel#3+Sub-channel#4+Sub-channel#5. Therefore, only one FRIV is required to indicate the two transmissions.

If Mode 4 in Fig. 4 is used for sub-channel numbering, the first transmission indicated occupies two sub-channels. For example, the following two sub-channels are occupied: Sub-channel#0+Sub-channel#1. The second transmission indicated occupies two sub-channels. For example, the following two sub-channels are occupied: Sub-channel#3+Sub-channel#4. Therefore, two FRIVs are required to indicate the two transmissions.

It should be noted here that in some embodiments of the present disclosure, when the sub-channel indication information includes indications for different RB sets, joint indication or independent indication can be used. The present disclosure does not make specific limitations.

For the figures involved in some embodiments of the present disclosure (such as Fig. 5 to Fig. 8), a horizontal direction represents time (at a granularity of slot), and a vertical direction represents the frequency domain (at a granularity of PRB).

As shown in Fig. 9, embodiments of the present disclosure further provide a method for selecting resource of a sidelink, applied to a first user equipment, and including:

a first determination component 901, configured to determine an initial candidate resource set according to resource pool configuration information and/or a first parameter, wherein the resource pool configuration information includes configuration information of a sub-channel, and the sub-channel includes interlaced resource blocks (IRBs);

a second determination component 902, configured to: perform resource exclusion on the initial candidate resource set, and determine a remaining candidate resource set meeting a requirement; and

a selection component 903, configured to select, from the remaining candidate resource set, a transmission resource for PSCCH and PSSCH transmission.

In some embodiments of the present disclosure, the configuration information of the sub-channel includes: mapping relationship between a sub-channel and IRB, and/or, sub-channel indexes.

In some embodiments of the present disclosure, the mapping relationship between sub-channel and IRB includes at least one of the following:

one sub-channel corresponds to N consecutive IRBs in the same resource block set (RB set); and

one sub-channel corresponds to N consecutive IRBs in the same resource pool,

wherein N is a configured or pre-configured positive integer.

In some embodiments of the present disclosure, the sub-channel indexes are defined according to any one of the following:

in a case that a resource pool includes one RB set, a sub-channel index of a first sub-channel is related to a frequency domain index of a 1st IRB corresponding to the first sub-channel and a quantity of IRBs corresponding to each sub-channel; the frequency domain index is related to a sort order of a plurality of IRBs in the RB set in a frequency domain, wherein the first sub-channel is any sub-channel in the resource pool;

in a case that the resource pool includes a plurality of RB sets, a sub-channel index of a second sub-channel is defined according to the mapping relationship between sub-channel and IRB; and the second sub-channel is any sub-channel in the resource pool.

In some embodiments of the present disclosure, the sub-channel index of the second sub-channel is defined according to the mapping relationship between sub-channel and IRB, which includes any one of the following:

in a case that the mapping relationship between sub-channel and IRB indicates that one sub-channel corresponds to N consecutive IRBs in the same resource pool, the sub-channel index of the second sub-channel is related to a frequency domain index of a 1st IRB corresponding to the second sub-channel and the quantity of the IRBs corresponding to each sub-channel;

in a case that the mapping relationship between sub-channel and IRB indicates that one sub-channel corresponds to N consecutive IRBs in the same RB set, the sub-channel index of the second sub-channel is defined according to any rule of the following:

sub-channels in different RB sets are numbered cumulatively in sequence;

sub-channels in different RB sets are numbered independently in sequence; and

the sub-channels are numbered cumulatively in sequence based on the IRBs.

In some embodiments of the present disclosure, the sub-channel index of the second sub-channel is defined according to the rule that the sub-channels in different RB sets are numbered cumulatively in sequence, which includes: the sub-channel index of the second sub-channel is defined according to the frequency domain index of the 1st IRB corresponding to the second sub-channel, the quantity of the IRBs corresponding to each sub-channel, and a total quantity of sub-channels in previous (m-1) RB sets, wherein the second sub-channel is in an $m^{th}$ RB set, $1 \leq m \leq M$; M is a total quantity of RB sets in the resource pool; and frequency domain indexes of the IRBs in the RB sets are numbered independently.

In some embodiments of the present disclosure, the sub-channel index of the second sub-channel is defined according to the rule that the sub-channels in different RB sets are numbered independently in sequence, which includes:

when the second sub-channel corresponds to IRBs in a first RB set, the sub-channel index of the second sub-channel is determined according to the frequency domain index of the 1st IRB corresponding to the second sub-channel and the quantity of the IRBs included in each sub-channel; the first RB set is any RB set in the resource pool, wherein in another RB set except the first RB set, the sub-channel index of a sub-channel corresponding to the IRBs that are the same as the IRBs corresponding to the second sub-channel is the same as the sub-channel index of the second sub-channel;

or, the sub-channel index of the second sub-channel in each RB set is related to the frequency domain index of the 1st IRB corresponding to the second sub-channel and the quantity of the IRBs corresponding to each sub-channel,

wherein the frequency domain indexes of the IRBs in the RB sets are numbered independently.

In some embodiments of the present disclosure, the sub-channel index of the second sub-channel is defined according to the rule that the IRBs are numbered cumulatively in sequence based on the IRBs, which includes:

when the second sub-channel corresponds to IRBs of a 1st RB set, the sub-channel index of the second sub-channel is determined according to the frequency domain index of the 1st IRB corresponding to the second sub-channel, a quantity of the IRBs included in each sub-channel, and a total quantity M of RB sets in the resource pool,

wherein in an $m^{th}$ RB set, the sub-channel index of the sub-channel corresponding to the IRBs that are the same as the IRBs corresponding to the second sub-channel is related to the sub-channel index of the second sub-channel and m, wherein 2≤m≤M.

In some embodiments of the present disclosure, the first parameter includes at least one of the following:

RB set indication information, including indication information of an RB set in which the initial candidate resource set is, and/or, a number of used RB sets for determining the initial candidate resource set;

a type of a candidate single-slot resource;

a quantity of the initial candidate resource set;

a quantity of the remaining candidate resource set.

In some embodiments of the present disclosure, the RB set indication information is determined according to at least one of the following: a quantity of sub-channels occupied by the PSCCH and PSSCH transmission, a channel busy rate (CBR), a channel occupancy rate (CR), a channel access process result, and all RB sets in the resource pool.
In some embodiments of the present disclosure, the first determination component 901 includes:

a first determination subcomponent, configured to determine a candidate single-slot resource in a resource selection window according to the resource pool configuration information and/or the first parameter; and

a second determination subcomponent, configured to determine the initial candidate resource set according to the candidate single-slot resource.

In some embodiments of the present disclosure, the second determination subcomponent is specifically configured to perform at least one of the following:

when a quantity of the initial candidate resource set is equal to one, the initial candidate resource set includes at least one of the following in the resource selection window: all types of candidate single-slot resources, and all types of candidate single-slot resources in a target **RB** set;

when a quantity of the initial candidate resource set is greater than one, each initial candidate resource set includes at least one of the following in the resource selection window: at least one type of candidate single-slot resource, all types of candidate single-slot resources of a target RB set, and all types of candidate single-slot resources in M RB sets, wherein M is a configured or pre-configured positive integer.

In some embodiments of the present disclosure, the first determination component 901 further includes:
a third determination subcomponent, configured to determine a quantity of the initial candidate resource set according to at least one item in the first parameter, and/or, a quantity of a type of the determined candidate single-slot resource.
In some embodiments of the present disclosure, the target RB set is determined based on the first parameter; and the first parameter includes RB set indication information, and/or, a quantity of sub-channels occupied by the PSCCH and PSSCH transmission.
In some embodiments of the present disclosure, a type of the candidate single-slot resource is determined according to at least one of the following: at least one item in the first parameter, a quantity of sub-channels occupied by the PSCCH and PSSCH transmission, a type of any supported candidate single-slot resource, and a type of any one supported candidate single-slot resource.
In some embodiments of the present disclosure, the candidate single-slot resource is in one slot in a time domain, and is any one of the following in a frequency domain:

a sub-channel;

$L_{subCH}$ consecutive sub-channels;

$L_{subCH}$ consecutive sub-channels in the same RB set;

$L_{subCH}$ sub-channels in a plurality of adjacent RB sets, wherein IRBs corresponding to the sub-channels of different RB sets are the same; and

P contiguous RB sets, wherein each RB set includes Q consecutive sub-channels, wherein P and Q are positive integers, and a product of P and Q is $L_{subCH}$.

In some embodiments of the present disclosure, the remaining candidate resource set meets at least one of the following requirements:

when there is one initial candidate resource set, a quantity of candidate single-slot resources in the remaining candidate resource set is greater than or equal to a product of a first ratio and a total quantity of candidate single-slot resources in the initial candidate resource set;

when there are a plurality of initial candidate resource sets, a quantity of candidate single-slot resources in each remaining candidate resource set is greater than or equal to a product of a second ratio and a total quantity of candidate single-slot resources in the initial candidate resource set corresponding to the remaining candidate resource set; and

when there are a plurality of initial candidate resource sets, a quantity of candidate single-slot resources in at least one remaining candidate resource set is greater than or equal to a product of a third ratio and a total quantity of candidate single-slot resources in the initial candidate resource set corresponding to the at least one remaining candidate resource set.

Further, the apparatus further includes a reporting component, configured to perform any one of the following:

reporting one remaining candidate resource set; and

reporting a plurality of remaining candidate resource sets, wherein each remaining candidate resource set includes one or more types of non-excluded candidate single-slot resources, or, each remaining candidate resource set includes non-excluded candidate single-slot resources in one or more RB sets.

Further, the reporting component is further configured to:
during the reporting one remaining candidate resource set, or during the reporting a plurality of remaining candidate resource sets, further report RB set indication information and/or type information, wherein the type information is used for indicating a type of the candidate single-slot resource in reported remaining candidate resource set.
In some embodiments of the present disclosure, the selection component 903 includes:
selection subcomponent is configured to:
when only one remaining candidate resource set is included, use any one of the following modes to select the transmission resource:

selecting the transmission resource randomly from the remaining candidate resource set;

preferentially selecting candidate single-slot resources in one RB set in the remaining candidate resource set as the transmission resource; and

preferentially selecting candidate single-slot resources in different RB sets in the remaining candidate resource set as the transmission resource, wherein IRBs corresponding to sub-channels of the candidate single-slot resources in different RB sets are the same.

In some embodiments of the present disclosure, the selection subcomponent is further configured to:
when the transmission resource is unable to be selected from the candidate single-slot resources in one RB set, or when the transmission resource is unable to be selected from the candidate single-slot resources in different RB sets, selecting the transmission resource randomly from the remaining candidate resource set.
In some embodiments of the present disclosure, the selection component 903 includes:
a fourth determination subcomponent, configured to determine, based on at least one of the following, a mode for selecting the transmission: a quantity of sub-channels occupied by the PSCCH and PSSCH transmission, a quantity of RB sets in a resource pool, and a quantity of sub-channels included in each RB set.
In some embodiments of the present disclosure, when a granularity of the remaining candidate resource set is single sub-channel: any one of the selected transmission resources is in the same RB set and corresponding sub-channels are consecutive in a frequency domain, and/or, any one of the selected transmission resources is in different RB sets and IRBs corresponding to sub-channels in different RB sets are the same.

In some embodiments of the present disclosure, the selection component 903 is further configured to: when a plurality of remaining candidate resource sets are included, any one of the following modes is used to select the transmission resource:

selecting the transmission resource from any one of the remaining candidate resource sets; and

preferentially selecting the transmission resource from a first target remaining candidate resource set, wherein the first target remaining candidate resource set includes candidate single-slot resources in the same RB set.

Further, the selection component 903 is further configured to:
when the transmission resource is unable to be selected from the first target remaining candidate resource set, perform any one of the following:

selecting the transmission resource from any remaining candidate resource set; and

selecting the transmission resource from a second target remaining candidate resource set, and when the transmission resource is unable to be selected from the second target remaining candidate resource set, selecting the transmission resource from any remaining candidate resource set, wherein the second remaining candidate resource set includes candidate single-slot resources in different RB sets.

Further, the apparatus further includes:
an indication component, configured to carry sidelink control information (SCI) in a PSCCH, wherein the SCI at least includes a transmission resource indication field, and the transmission resource indication field includes at least one of the following:

sub-channel indication information, used for indicating sub-channel frequency domain information and/or a quantity of sub-channels;

resource type indication information, used for indicating a type of the transmission resource; and

RB set indication information, used for indicating an RB set in which the transmission resource is in, and/or, indicating a quantity of sub-channels corresponding to the RB set in which the transmission resource is.

In some embodiments of the present disclosure, the sub-channel indication information is at least one of the following: a frequency domain resource indicator value (FRIV) and a bitmap.
In some embodiments of the present disclosure, when the sub-channel indication information is at least one FRIV, the sub-channel indication information is used for indicating at least one of the following:

frequency domain information of a transmission resource that is transmitted at most twice; and

frequency domain information of a transmission resource that is transmitted at most for three times.

In some embodiments of the present disclosure, when the sub-channel indication information indicates, through the at least one FRIV, the frequency domain information of the transmission resource that is transmitted at most twice, a quantity of the FRIV is determined according to at least one of the following: a quantity of occupied sub-channels, indexes of the sub-channels, a quantity of occupied RB sets, a quantity of RB sets in a resource pool, and a quantity of occupied sub-channels in each RB set; or
when the sub-channel indication information indicates, through the at least one FRIV, the frequency domain information of the transmission resource that is transmitted at most for three times, a quantity of the FRIV is determined according to at least one of the following: a quantity of the indicated transmission resources, a quantity of occupied sub-channels, indexes of the sub-channels, a quantity of occupied RB sets, a quantity of RB sets in a resource pool, and a quantity of occupied sub-channels in each RB set.
As shown in Fig. 10, embodiments of the present disclosure further provide a user equipment, including a transceiver 1010, a memory 1020, a processor 1000, and a computer program stored on the memory 1020 and run on the processor 1000. The processor 1000, when running the computer program, implements the processes of the embodiment of the above-mentioned method for selecting resource of the sidelink, and can achieve the same technical effects, details of which are omitted here for brevity.
The transceiver 1010 is configured to receive and transmit data under the control of the processor 1000.

In Fig. 10, a bus architecture may include any quantity of buses and bridges which are interconnected, and specifically connect various circuits of one or more processors represented by the processor 1000 to various circuits of one or more memories represented by the memory 1020. The bus architecture may further connect various other circuits such as a peripheral device, a regulator, and a power management circuit, which are well-known in the art. Therefore, they will not be further described herein. A bus interface provides an interface. The transceiver 1010 may be a plurality of elements, namely, including a transmitter and a receiver, to provide a unit for communication between a transmission medium and various other apparatuses. For different user equipments, a user interface 1030 may be further an interface for connecting internal and external desired devices. The connected devices include but are not limited to a keypad, a display, a speaker, a microphone, a lever, and the like.

The processor 1000 is responsible for managing the bus architecture and performing general processing, and the memory 1020 may store data used by the processor 1000 during operations.

An embodiment of the present disclosure further provides a readable storage medium, having a program stored therein. The program, when run by a processor, implements the processes of the foregoing method embodiment for selecting resource of the sidelink and can achieve the same technical effects, details of which are omitted here for brevity. The readable storage medium includes, for example, a read-only memory (ROM), a random access memory (RAM), a magnetic disk, or a compact disc.

Finally, it should be further noted that in this document, relationship terms such as first and second are used solely to distinguish one entity or operation from another entity or operation without necessarily requiring or implying any actual such relationship or order between such entities or operations. Furthermore, the terms "include", "including", or any other variation thereof, are intended to encompass a non-exclusive inclusion, such that a process, method, article, or terminal device that includes a list of elements does not include only those elements but may include other elements not explicitly listed or inherent to such process, method, article, or device. Without further limitation, an element defined by the phrase "including a/an..." does not exclude the presence of another identical elements in the process, method, article or device that includes the element.

The foregoing descriptions are optional implementations of the present disclosure only. It is noted that a person of ordinary skill in the art may make some improvements and modifications without departing from the principle of the present disclosure and the improvements and modifications shall fall within the protection scope of the present disclosure.

## Claims

1. A method for selecting resource of a sidelink, applied to a first user equipment, and comprising:

   determining an initial candidate resource set according to resource pool configuration information and/or a first parameter, wherein the resource pool configuration information comprises configuration information of a sub-channel, and the sub-channel comprises interlaced resource blocks, IRBs;
   performing resource exclusion on the initial candidate resource set, and determining a remaining candidate resource set meeting a requirement; and
   selecting, from the remaining candidate resource set, a transmission resource for physical sidelink control channel, PSCCH, and physical sidelink shared channel, PSSCH, transmission.

2. The method as claimed in claim 1, wherein the configuration information of the sub-channel comprises: mapping relationship between the sub-channel and IRB, and/or, sub-channel indexes.

3. The method as claimed in claim 2, wherein the mapping relationship between the sub-channel and the IRB comprises at least one of the following:

   one sub-channel corresponds to N consecutive IRBs in the same resource block set, RB set; and
   one sub-channel corresponds to N consecutive IRBs in the same resource pool,
   wherein N is a configured or pre-configured positive integer.

4. The method as claimed in claim 2, wherein the sub-channel indexes are defined according to any one of the following:

   in a case that a resource pool comprises one RB set, a sub-channel index of a first sub-channel is related to a frequency domain index of a $1^{st}$ IRB corresponding to the first sub-channel and a quantity of IRBs corresponding to each sub-channel; the frequency domain index is related to a sort order of IRBs in the RB set in a frequency domain, wherein the first sub-channel is any sub-channel in the resource pool;
   in a case that the resource pool comprises multiple RB sets, a sub-channel index of a second sub-channel is defined according to the mapping relationship between the sub-channel and the IRB; and the second sub-channel is any sub-channel in the resource pool.

5. The method as claimed in claim 4, wherein the sub-channel index of the second sub-channel is defined according to the mapping relationship between the sub-channel and the IRB, which includes any one of the following:

in a case that the mapping relationship between the sub-channel and the IRB indicates that one sub-channel corresponds to N consecutive IRBs in the same resource pool, the sub-channel index of the second sub-channel is related to a frequency domain index of a 1st IRB corresponding to the second sub-channel and the quantity of the IRBs corresponding to each sub-channel;
in a case that the mapping relationship between the sub-channel and the IRB indicates that one sub-channel corresponds to N consecutive IRBs in the same RB set, the sub-channel index of the second sub-channel is defined according to any rule of the following:

sub-channels in different RB sets are numbered cumulatively in sequence;
sub-channels in different RB sets are numbered independently in sequence; and
the sub-channels are numbered cumulatively in sequence based on the IRBs.

6. The method as claimed in claim 5, wherein the sub-channel index of the second sub-channel is defined according to the rule that the sub-channels in different RB sets are numbered cumulatively in sequence, which comprises: the sub-channel index of the second sub-channel is defined according to the frequency domain index of the 1st IRB corresponding to the second sub-channel, the quantity of the IRBs corresponding to each sub-channel, and a total quantity of sub-channels in previous $(m-1)$ RB sets, wherein the second sub-channel is in an $m^{th}$ RB set, $1 \leq m \leq M$; M is a total quantity of RB sets in the resource pool; and frequency domain indexes of the IRBs in the RB sets are numbered independently.

7. The method as claimed in claim 5, wherein the sub-channel index of the second sub-channel is defined according to the rule that the sub-channels in different RB sets are numbered independently in sequence, which includes:

when the second sub-channel corresponds to IRBs in a first RB set, the sub-channel index of the second sub-channel is determined according to the frequency domain index of the 1st IRB corresponding to the second sub-channel and the quantity of the IRBs included in each sub-channel; the first RB set is any RB set in the resource pool, wherein in another RB set except the first RB set, the sub-channel index of a sub-channel corresponding to the IRBs that are the same as the IRBs corresponding to the second sub-channel is the same as the sub-channel index of the second sub-channel;
or, the sub-channel index of the second sub-channel in each RB set is related to the frequency domain index of the 1st IRB corresponding to the second sub-channel and the quantity of the IRBs corresponding to each sub-channel,
wherein the frequency domain indexes of the IRBs in the RB sets are numbered independently.

8. The method as claimed in claim 5, wherein the sub-channel index of the second sub-channel is defined according to the rule that the IRBs are numbered cumulatively in sequence based on the IRBs, which comprises:

when the second sub-channel corresponds to IRBs of a 1st RB set, the sub-channel index of the second sub-channel is determined according to the frequency domain index of the 1st IRB corresponding to the second sub-channel, a quantity of the IRBs included in each sub-channel, and a total quantity M of RB sets in the resource pool,
wherein in an $m^{th}$ RB set, the sub-channel index of the sub-channel corresponding to the IRBs that are the same as the IRBs corresponding to the second sub-channel is related to the sub-channel index of the second sub-channel and m, wherein $2 \leq m \leq M$.

9. The method as claimed in claim 1, wherein the first parameter comprises at least one of the following:

RB set indication information, comprising indication information of an RB set in which the initial candidate resource set is, and/or, a number of used RB sets for determining the initial candidate resource set;
a type of a candidate single-slot resource;
a quantity of the initial candidate resource set; and
a quantity of the remaining candidate resource set.

10. The method as claimed in claim 9, wherein the RB set indication information is determined according to at least one of the following: a number of sub-channels occupied by the PSCCH and PSSCH transmission, a channel busy rate, CBR, a channel occupancy rate, CR, a channel access process result, and all RB sets in the resource pool.

11. The method as claimed in claim 1, wherein the determining the initial candidate resource set according to the resource pool configuration information and/or the first parameter comprises:

   determining a candidate single-slot resource in a resource selection window according to the resource pool configuration information and/or the first parameter; and
   determining the initial candidate resource set according to the candidate single-slot resource.

12. The method as claimed in claim 11, wherein the determining the initial candidate resource set according to the candidate single-slot resource comprises any one of the following:

   when a quantity of the initial candidate resource set is equal to one, the initial candidate resource set comprises at least one of the following in the resource selection window: all types of candidate single-slot resources, and all types of candidate single-slot resources in a target **RB** set;
   when a quantity of the initial candidate resource set is greater than one, each initial candidate resource set comprises at least one of the following in the resource selection window: at least one type of candidate single-slot resource, all types of candidate single-slot resources of a target RB set, and all types of candidate single-slot resources in M RB sets, wherein M is a configured or pre-configured positive integer.

13. The method as claimed in claim 12, wherein the determining the initial candidate resource set according to the candidate single-slot resource further comprises:
   determining a quantity of the initial candidate resource set according to at least one item in the first parameter, and/or, a quantity of a type of determined candidate single-slot resource.

14. The method as claimed in claim 12, wherein the target RB set is determined based on the first parameter; and the first parameter comprises RB set indication information, and/or, a quantity of sub-channels occupied by the PSCCH and PSSCH transmission.

15. The method as claimed in claim 12, wherein a type of the candidate single-slot resource is determined according to at least one of the following: at least one item in the first parameter, a quantity of sub-channels occupied by the PSCCH and PSSCH transmission, a type of any supported candidate single-slot resource, and a type of any one supported candidate single-slot resource.

16. The method as claimed in claim 12, wherein the candidate single-slot resource is in one slot in a time domain, and is any one of the following in a frequency domain:

   a sub-channel;
   $L_{subCH}$ contiguous sub-channels;
   $L_{subCH}$ contiguous sub-channels in the same RB set;
   $L_{subCH}$ sub-channels in multiple adjacent RB sets, wherein IRBs corresponding to the sub-channels of different RB sets are the same; and
   P contiguous RB sets, wherein each RB set comprises Q contiguous sub-channels, wherein P and Q are positive integers, and a product of P and Q is $L_{subCH}$.

17. The method as claimed in claim 1, wherein the remaining candidate resource set meets at least one of the following requirements:

   when there is one initial candidate resource set, a quantity of candidate single-slot resources in the remaining candidate resource set is greater than or equal to a product of a first ratio and a total quantity of candidate single-slot resources in the initial candidate resource set;
   when there are multiple initial candidate resource sets, a quantity of candidate single-slot resources in each remaining candidate resource set is greater than or equal to a product of a second ratio and a total quantity of candidate single-slot resources in the initial candidate resource set corresponding to the remaining candidate resource set; and
   when there are multiple initial candidate resource sets, a quantity of candidate single-slot resources in at least one remaining candidate resource set is greater than or equal to a product of a third ratio and a total quantity of candidate single-slot resources in the initial candidate resource set corresponding to the at least one remaining candidate resource set.

18. The method as claimed in claim 1, wherein after a step of performing resource exclusion on the initial candidate resource set, and determining the remaining candidate resource set meeting the requirement, the method further comprises any one of the following:

   reporting one remaining candidate resource set; and
   reporting multiple remaining candidate resource sets, wherein each remaining candidate resource set comprises one or more types of non-excluded candidate single-slot resources, or, each remaining candidate resource set comprises non-excluded candidate single-slot resources in one or more RB sets.

19. The method as claimed in claim 18, wherein the method further comprises:
   during reporting of one remaining candidate resource set, or during reporting of multiple remaining candidate resource sets, further reporting RB set indication information and/or type information, wherein the type information is used for indicating a type of the candidate single-slot resources in reported remaining candidate resource set.

20. The method as claimed in claim 1, wherein the selecting, from the remaining candidate resource set, the transmission resource for PSCCH and PSSCH transmission comprises:
   when only one remaining candidate resource set is comprised, any one of the following modes is used to select the transmission resource:

   selecting the transmission resource randomly from the remaining candidate resource set;
   preferentially selecting candidate single-slot resources in one RB set in the remaining candidate resource set as the transmission resource; and
   preferentially selecting candidate single-slot resources in different RB sets in the remaining candidate resource set as the transmission resource, wherein IRBs corresponding to sub-channels of the candidate single-slot resources in different RB sets are the same.

21. The method as claimed in claim 20, wherein the method further comprises:
   when the transmission resource is unable to be selected from the candidate single-slot resources in one RB set, or when the transmission resource is unable to be selected from the candidate single-slot resources in different RB sets, selecting the transmission resource randomly from the remaining candidate resource set.

22. The method as claimed in claim 20, wherein a method for selecting the transmission is determined based on at least one of the following: a quantity of sub-channels occupied by the PSCCH and PSSCH transmission, a quantity of RB sets in a resource pool, and a quantity of sub-channels comprised in each RB set.

23. The method as claimed in claim 20, wherein when a granularity of the remaining candidate resource set is single sub-channel: any one of the selected transmission resource is in the same RB set and corresponding sub-channels are consecutive in a frequency domain, and/or, any one of the selected transmission resource is in different RB sets and IRBs corresponding to sub-channels in different RB sets are the same.

24. The method as claimed in claim 1, wherein the selecting, from the remaining candidate resource set, the transmission resource for PSCCH and PSSCH transmission comprises:
   when a plurality of remaining candidate resource sets are comprised, any one of the following modes is used to select the transmission resource:

   selecting the transmission resource from any one of the remaining candidate resource sets; and
   preferentially selecting the transmission resource from a first target remaining candidate resource set, wherein the first target remaining candidate resource set comprises candidate single-slot resources in the same RB set.

25. The method as claimed in claim 24, wherein the method further comprises:
   when the transmission resource is unable to be selected from the first target remaining candidate resource set, performing any one of the following:

   selecting the transmission resource from any remaining candidate resource set; and

selecting the transmission resource from a second target remaining candidate resource set, and when the transmission resource is unable to be selected from the second target remaining candidate resource set, selecting the transmission resource from any remaining candidate resource set, wherein the second remaining candidate resource set comprises candidate single-slot resources in different RB sets.

26. The method as claimed in claim 1, wherein the method further comprises:
carrying sidelink control information, SCI, in a PSCCH, wherein the SCI at least comprises a transmission resource indication field, and the transmission resource indication field comprises at least one of the following:

sub-channel indication information, used for indicating sub-channel frequency domain information and/or a quantity of sub-channels;
resource type indication information, used for indicating a type of the transmission resource; and
RB set indication information, used for indicating an RB set in which the transmission resource is in, and/or, indicating a quantity of sub-channels corresponding to the RB set in which the transmission resource is.

27. The method as claimed in claim 26, wherein the sub-channel indication information is at least one of the following: a frequency domain resource indicator value, FRIV, and a bitmap.

28. The method as claimed in claim 27, wherein when the sub-channel indication information is at least one FRIV, the sub-channel indication information is used for indicating at least one of the following:

frequency domain information of a transmission resource that is transmitted at most twice; and
frequency domain information of a transmission resource that is transmitted at most for three times.

29. The method as claimed in claim 28, wherein when the sub-channel indication information indicates, through the at least one FRIV, the frequency domain information of the transmission resource that is transmitted at most twice, a quantity of the FRIV is determined according to at least one of the following: a quantity of occupied sub-channels, indexes of the sub-channels, a quantity of occupied RB sets, a quantity of RB sets in a resource pool, and a quantity of occupied sub-channels in each RB set;
or,
when the sub-channel indication information indicates, through the at least one FRIV, the frequency domain information of the transmission resource that is transmitted at most for three times, a quantity of the FRIV is determined according to at least one of the following: a quantity of the indicated transmission resources, a quantity of occupied sub-channels, indexes of the sub-channels, a quantity of occupied RB sets, a quantity of RB sets in a resource pool, and a quantity of occupied sub-channels in each RB set.

30. An apparatus for selecting resource of a sidelink, applied to a first user equipment, and comprising:

a first determination component, configured to determine an initial candidate resource set according to resource pool configuration information and/or a first parameter, wherein the resource pool configuration information comprises configuration information of a sub-channel, and the sub-channel comprises interlaced resource blocks, IRBs;
a second determination component, configured to: perform resource exclusion from the initial candidate resource set, and determine a remaining candidate resource set meeting a requirement; and
a selection component, configured to select, from the remaining candidate resource set, a transmission resource for PSCCH and PSSCH transmission.

31. A user equipment, comprising: a processor, a memory, and a program stored on the memory and runnable on the processor, wherein the program, when run by the processor, implements the steps of the method for selecting resource of the sidelink as claimed in any one of claims 1 to 29.

32. A readable-storage medium, having a program stored thereon, wherein the program, when run by a processor, implements the steps of the method for selecting resource of the sidelink as claimed in any one of claims 1 to 29.

Fig. 1

All
resources
in a
resource
pool in a
frequency
domain

Remaining
resource block

Sub-channel 5

Sub-channel 4

Sub-channel 3

Sub-channel 2

Sub-channel 1

Remaining
resource block

Fig. 2

| | |
|---|---|
| Determine an initial candidate resource set according to resource pool configuration information and/or a first parameter, wherein the resource pool configuration information includes configuration information of a sub-channel, and the sub-channel includes interlaced resource blocks (IRBs) | 201 |
| Performing resource exclusion in the initial candidate resource set, and determine a remaining candidate resource set meeting a requirement | 202 |
| Select, from the remaining candidate resource set, a transmission resource for physical sidelink control channel (PSCCH) and physical sidelink shared channel (PSSCH) transmission | 203 |

Fig. 3

Fig. 4

Fig. 5

Fig. 6

Fig. 7

Fig. 8

IRB#5 ← Sub-channel 5

IRB#4 ← Sub-channel 4

IRB#3 ← Sub-channel 3

IRB#2 ← Sub-channel 2

IRB#1 ← Sub-channel 1

Resource block set #2

Guard band

Resource block set #1

Fig. 9

First determination component ⟩ 901

Second determination component ⟩ 902

Selection component ⟩ 903

Fig. 10

Processor ⟩ 1000

Memory ⟩ 1020

Bus interface

Transceiver ⟩ 1010

User interface ⟩ 1030

## INTERNATIONAL SEARCH REPORT

| International application No. |
| --- |
| **PCT/CN2023/126101** |

| A. | CLASSIFICATION OF SUBJECT MATTER |
| --- | --- |
| | H04W 72/25(2023.01)i |

According to International Patent Classification (IPC) or to both national classification and IPC

| B. | FIELDS SEARCHED |
| --- | --- |

Minimum documentation searched (classification system followed by classification symbols)

IPC: H04W,H04Q,H04L

Documentation searched other than minimum documentation to the extent that such documents are included in the fields searched

Electronic data base consulted during the international search (name of data base and, where practicable, search terms used)

CNTXT, WPABS, ENTXTC, CNKI, 3GPP: 直通链路, 侧链路, 资源, 选择, 配置, 参数, 候选, 集合, 梳齿, 块, 排除, 剩余, 物理直通链路控制信道, 物理直通链路共享信道, 子信道, 数量, 编号, 单时隙, 频率资源指示数值, 非授权, side, link, SL, resource, select, configuration, allocation, parameter, candidate, set, interlaced, block, IRB, re-exclude, remain, PSCCH, PSSCH, sub, channel, number, amount, quantity, single, slot, frequency, indicate, value, FRIV, unlicensed, SL-U

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 115245023 A (BEIJING XIAOMI MOBILE SOFTWARE CO., LTD.) 25 October 2022 (2022-10-25) description, paragraphs 101-336 | 1-3, 9-25, 30-32 |
| Y | CN 115245023 A (BEIJING XIAOMI MOBILE SOFTWARE CO., LTD.) 25 October 2022 (2022-10-25) description, paragraphs 101-336 | 26-29 |
| Y | CN 113519135 A (APPLE INC.) 19 October 2021 (2021-10-19) description, paragraphs 16-197 | 26-29 |
| A | CN 111865505 A (RESEARCH INSTITUTE OF CHINA MOBILE COMMUNICATIONS CORPORATION et al.) 30 October 2020 (2020-10-30) entire document | 1-32 |
| A | CN 112512124 A (ZHEJIANG LAB) 16 March 2021 (2021-03-16) entire document | 1-32 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 December 2023** | **19 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| | International application No. |
|---|---|
| | **PCT/CN2023/126101** |

| C. | DOCUMENTS CONSIDERED TO BE RELEVANT | |
|---|---|---|
| Category* | Citation of document, with indication, where appropriate, of the relevant passages | Relevant to claim No. |
| A | CN 114467352 A (BEIJING XIAOMI MOBILE SOFTWARE CO., LTD.) 10 May 2022 (2022-05-10)<br>entire document | 1-32 |
| A | US 2019387377 A1 (SAMSUNG ELECTRONICS CO., LTD.) 19 December 2019 (2019-12-19)<br>entire document | 1-32 |
| A | WO 2022141465 A1 (HUAWEI TECHNOLOGIES CO., LTD.) 07 July 2022 (2022-07-07)<br>entire document | 1-32 |
| A | WO 2022222079 A1 (GUANGDONG OPPO MOBILE TELECOMMUNICATIONS CORP., LTD.) 27 October 2022 (2022-10-27)<br>entire document | 1-32 |

Form PCT/ISA/210 (second sheet) (July 2022)

**INTERNATIONAL SEARCH REPORT**
Information on patent family members

International application No.

**PCT/CN2023/126101**

| Patent document cited in search report | | | Publication date (day/month/year) | Patent family member(s) | | | Publication date (day/month/year) |
|---|---|---|---|---|---|---|---|
| CN | 115245023 | A | 25 October 2022 | None | | | |
| CN | 113519135 | A | 19 October 2021 | None | | | |
| CN | 111865505 | A | 30 October 2020 | None | | | |
| CN | 112512124 | A | 16 March 2021 | None | | | |
| CN | 114467352 | A | 10 May 2022 | None | | | |
| US | 2019387377 | A1 | 19 December 2019 | US | 11102631 | B2 | 24 August 2021 |
| | | | | US | 2021368312 | A1 | 25 November 2021 |
| | | | | US | 11659371 | B2 | 23 May 2023 |
| | | | | EP | 3574694 | A1 | 04 December 2019 |
| | | | | EP | 3574694 | A4 | 14 April 2021 |
| WO | 2022141465 | A1 | 07 July 2022 | None | | | |
| WO | 2022222079 | A1 | 27 October 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211380075